# EUROPÄISCHE PATENTSCHRIFT

(11) **EP 4 049 949 B1**
(45) Veröffentlichungstag und Bekanntmachung des Hinweises auf die Patenterteilung: **15.11.2023**
(21) Anmeldenummer: 21159642.4
(22) Anmeldetag: 26.02.2021
(51) Int. Cl.: B07C 5/36, B65B 5/10, B65G 47/96, B65G 47/44, B65G 69/16

(54) **VORRICHTUNG UND VERFAHREN FÜR DAS BELADEN EINES BEHÄLTERS MIT SORTIERTEM STÜCKGUT**
DEVICE AND METHOD FOR LOADING A CONTAINER WITH SORTED ITEMS
DISPOSITIF ET PROCÉDÉ POUR LE CHARGEMENT D'UN RÉCIPIENT COMPORTANT DES MARCHANDISES EN VRAC TRIÉES

(43) Veröffentlichungstag der Anmeldung: 31.08.2022
(73) Patentinhaber: BEUMER Group GmbH & Co. KG, 59269 Beckum (DE)
(72) Erfinder: Radner, Frederik, 59302 Oelde (DE); Dickmann, Sandra, 59269 Beckum (DE); Dirkmann, Markus, 59302 Oelde (DE); Wiesmann, Thomas, 59269 Beckum (DE)
(74) Vertreter: Angerhausen, Christoph

(56) Entgegenhaltungen:
- EP-A1- 2 450 112
- EP-B1- 2 686 260
- EP-B1- 3 383 745

## Beschreibung

Die Erfindung betrifft eine Vorrichtung und ein Verfahren für das Beladen eines Behälters mit sortiertem Stückgut.

Die EP 3 383 745 B1 offenbart ein Verfahren zum Beladen von Säcken mit Gruppen von Postpaketen. Die Pakete werden in Zwischenspeichern sortiert zwischengespeichert. Über einen Abzugsförderer werden kontrolliert die in den einzelnen Zwischenspeichern vorhandenen Pakete abgeführt und einer Befüllstation mit einer Mehrzahl Rutschen zugeführt. In der Füllstation rutscht das Stückgut über Rutschen in am unteren Ende der Rutschen befestigte Transportsäcke. An einer Leersacknachfülleinheit werden die Rutschen mit Leersäcken versehen, die Rutschen anschließend der Befüllstation zugeführt und die Säcke dort über die Rutschen befüllt und die befüllten Säcke anschließend an einer weiter stromabwärts gelegenen Position verschlossen und von den Rutschen entfernt werden, bevor die Rutschen über die Umlaufeinrichtung erneut der Leersacknachfülleinheit zugeführt werden.

Die EP 2 686 260 B1 beschreibt ein Verfahren zum Sortieren von Stückgut, welches von mindestens einem Sorter unmittelbar in mindestens einen Rollkäfig befördert wird. Das Verfahren weist das automatische Einbringen eines temporären Zwischenbodens in den Käfig auf. Zur Verringerung der Beschädigungsquote wird vorgeschlagen, den Zwischenboden aktiv bei einer oder mehreren Ebenen festzulegen, um sortierte Gegenstände aufzunehmen, wobei der Boden entfernt wird, wenn der Käfig zumindest teilweise gefüllt ist. Das Positionieren des temporären Zwischenbodens und der Betrieb des Sorters werden von Sensoren gesteuert, welche die physikalischen Eigenschaften, einschließlich Gewicht und Volumen des sortierten Stückguts in dem Käfig und des unsortierten Stückguts auf dem Sorter berücksichtigt werden. Aus der EP 2 450 112 A1 ist ferner ein Verfahren zum Einladen von Stückgütern in eine Transportbox bekannt, wobei die Transportbox während des Einladens verkippt wird.

Die DE 10 2005 006 546 B4 beschreibt einen Vertikalförderer zum Vertikalfördern von Stückgut von einer oberen Übergabestelle zu einer vertikal darunter angeordneten Übergabestelle mittels einer nach unten öffenbaren Aufnahme, durch welche im geöffneten Zustand aufgenommenes Stückgut nach unten in eine nächstuntere vertikale Aufnahme fällt.

Die EP 3 025 971 B1 beschreibt eine Füll- und Wechselvorrichtung zum Befüllen wenigstens eines Behälters mit Stückgut.

Die aus dem Stand der Technik bekannten Vorrichtungen und Verfahren haben den Nachteil, dass insbesondere in Anwendungsfällen, bei denen nur ein vergleichsweise geringes Stückgutaufkommen besteht, eine nur unzureichende Auslastung der Vorrichtung erreicht wird, sodass insbesondere für Anwendungsfälle, bei denen viele unterschiedliche Sorten sortiert werden müssen, eine entsprechend hohe Anzahl unabhängig voneinander betriebener Vorrichtungen bereitgestellt werden muss, die jeweils die erwähnte, niedrige Auslastung aufweisen. Beispielsweise im Logistikbereich kommt es vor, dass für die Befüllung eines Käfigs ein ganzer Tag benötigt wird, etwa aufgrund eines geringen Aufkommens von Sendungen, welche das dem Käfig zugeordnete Sortierkriterium aufweisen.

Diese Aufgabe wird durch ein Verfahren mit den Merkmalen des Anspruchs 1 gelöst. Der nebengeordnete Anspruch 7 betrifft eine entsprechende Vorrichtung. Vorteilhafte Ausführungsformen sind jeweils Gegenstand der abhängigen Ansprüche.

Demgemäß ist bei einem Verfahren für das Beladen eines Behälters mit sortiertem Stückgut vorgesehen, dass dieses die Schritte aufweist:
- Sortieren von unsortiertem Stückgut in eine Mehrzahl Zwischenspeicher, wobei in jedem Zwischenspeicher sortiertes Stückgut erhalten wird;
- Abführen des sortierten Stückguts von mindestens einer der Zwischenspeicher auf einen Abzugsförderer einer Förderstrecke, mit der das sortierte Stückgut einer Befüllstation zugeführt wird, wobei das sortierte Stückgut als ein kompakter Stückgutstrom über eine bodenseitige Öffnung des Zwischenspeichers auf den Abzugsförderer fällt, wobei das Abführen des sortierten Stückguts das sequenzielle Abführen eines ersten sortierten Stückguts aus einem ersten Zwischenspeicher und das Abführen eines zweiten sortierten Stückguts aus einem zweiten Zwischenspeicher aufweist, wobei das erste und das zweite sortierte Stückgut aufeinanderfolgend auf dem Abzugsförderer aufgelegt werden; und

Beladen eines zu beladenen Behälters in der Befüllstation mit dem ersten und dem zweiten sortierten Stückgut. Dabei kann entweder
a. der zu beladene Behälter in einer zur Vertikalen geneigten Position gehalten oder von einer zur Vertikalen geneigten Position in eine aufrechte Position geschwenkt werden, wobei der vertikale Abstand zwischen einer Einfüllöffnung des Behälters und einem Boden des Behälters kontinuierlich oder schrittweise vergrößert wird, oder
b. ein höhenverstellbarer Schacht der Befüllstation mit dem sortierten Stückgut befüllt und in dem zu beladenen Behälter abgesenkt werden, und wobei das sortierte Stückgut aus dem Schacht in den Behälter entleert wird, wenn der Schacht infolge des Absenkens eine untere Position erreicht hat, oder
c. der kompakte Stückgutstrom von einem Zuführförderer der Förderstrecke einer Stückgutsammelstelle zugeführt werden, von welcher die Stückgüter des Stückgutstroms von einem Roboter in den Behälter dosiert werden.

Dadurch, dass das unsortierte Stückgut vor dem Beladen des Behälters in einer Mehrzahl Zwischenspeicher vorsortiert wird, welche funktional einem Pufferspeicher entsprechen können, bevor das sortierte Stückgut mit Hilfe der Förderstrecke der Befüllstation für die Befüllung des Schachts oder Behälters bzw. eines Käfigs zugeführt wird, kann eine höhere Auslastung der Befüllstation erreicht werden.

Beispielsweise im Logistikbereich können abhängig von Packmaßen, Packgewichten, Zieladressen und einer Vielzahl anderer Kriterien eine Vielzahl Zwischenspeichern bereitgestellt sein, welche jeweils bestimmten Sortierkriterien zugewiesen sind. Je nach zugewiesenen Sortierkriterien kann die Befüllung des Zwischenspeichers mehrere Stunden oder sogar Tage andauern. Eine einzige Befüllstation kann erfindungsgemäß ausreichend sein, um eine annähernd beliebig skalierbare Vielzahl von Zwischenspeichern zu bedienen. Insbesondere dann, wenn das Sortieren des unsortierten Stückguts mit Hilfe einer Sortierschleife erfolgt, die im Falle eines gefüllten Zwischenspeichers und zugleich ausgelasteter Befüllstation die Weiterzirkulierung des in dem gefüllten Ziel-Zwischenspeicher nicht ablegbaren Stückguts erlaubt, ist im Grenzfall eine Auslastung der Befüllstation bis zur Vollauslastung denkbar, auch wenn im Anwendungsfall mit einem gewissen Auslastungspuffer gearbeitet werden wird.

Um einen gleichmäßigen kompakten Sortiergutstrom auf dem Abzugsförderer zu erzeugen, kann vorgesehen sein, dass die Öffnung, etwa eine Klappe oder eine Falltür mit einstellbarem Öffnungsquerschnitt, stufenweise oder in einer kontinuierlichen Öffnungsbewegung geöffnet wird, um ein gleichmäßiges Herausfallen der Vorsortierung Stückgüter auf den Abzugsförderer zu gewährleisten. Insbesondere kann vorgesehen sein, dass die Öffnung einen Stellantrieb aufweist, mit dem die Öffnung zwischen einer geöffneten Position und einer geschlossenen Position verstellt werden kann, wobei die Öffnung vorzugsweise Zwischenpositionen zwischen einer vollständig geöffneten Position und der Schließposition einnehmen kann.

Die Varianten a. und b unterscheiden sich darin, dass sie unterschiedliche technische Lösung für dieselbe Aufgabe der möglichst produktschonenden Ablage der sortierten Stückgüter in dem Behälter schaffen. Dies kann bei beiden Varianten dadurch erreicht werden, dass abhängig von einem Füllstand der Stückgüter in dem Behälter bzw. dem höhenverstellbaren Schacht eine Verschwenkposition des Behälters bzw. eine vertikale Stellposition des Schachts derart nachgeregelt wird, dass die Fallhöhe des zugeführten Stückguts minimiert wird.

Die Variante a. hat gegenüber der Variante b. den Vorteil, dass die Stückgüter von der Förderstrecke unmittelbar in den zu beladenen Behälter dosiert werden, während bei der Variante b. die Stückgüter von der Förderstrecke zunächst in den höhenverstellbaren Schacht dosiert werden, aus welchem die Stückgüter in den zu beladenen Behälter überführt werden. Die Überführung der Stückgüter aus dem Schacht in den zu beladenen Behälter kann beispielsweise dann erfolgen, wenn der Schacht eine vorgegebene Befüllung erreicht hat, welche einem bevorzugten Füllvolumen des zu beladenen Behälters entsprechen kann.

Sowohl bei der Variante a. als auch bei der Variante b. können die Volumina der Zwischenspeicher einem ganzzahligen Bruchteil des Füllvolumens des zu befüllenden Behälters entsprechen, wobei auch umfasst sein kann, dass die Volumina der Zwischenspeicher dem Füllvolumen des Behälters entsprechen.

In dem Fall a. kann der Behälter abhängig von einem tatsächlichen oder erwarteten Füllstand des Stückguts in dem Behälter aus der zur Vertikalen geneigten Position in die aufrechte Position geschwenkt werden. Der tatsächliche Füllstand des Stückguts in dem Behälter kann mithilfe mindestens eines Füllstandssensors erfasst werden. Der erwartete Füllstand des Stückguts kann anhand bekannter volumetrischer Daten der in den Zwischenspeichern vorgehaltenen Stückgüter zumindest näherungsweise bestimmt werden.

Die aufrechte Position kann eine Position des Behälters sein, in welcher eine obere Einfüllöffnung des Behälters einen im Wesentlichen horizontal angeordneten Öffnungsquerschnitt aufweist. Die zu der Vertikalen geneigte Position kann eine Position sein, in welcher der Öffnungsquerschnitt des Behälters einem Zuführförderer der Förderstrecke zugewandt ist.

Der Behälter kann in dem Fall a. um eine horizontale Achse zwischen der zur Vertikalen geneigten Position und der aufrechten Position verschwenkt werden, welche beabstandet von einem Boden des Behälters und vorzugsweise näher an der Einfüllöffnung des Behälters als an dem Boden des Behälters angeordnet ist, sodass bei dem Verschwenken des Behälters zwischen den beiden genannten Positionen der Boden eine vergleichsweise größere vertikale Verlagerung erfährt als die Einfüllöffnung, wobei vorzugsweise letztere in jeder Verschwenkposition dem Zuführförderer zugewandt ist, um die Zuführung von Stückgut in den Behälter zu ermöglichen.

Das Schwenken des Behälters im Fall a. bzw. das Absenken des Schachts im Fall b. kann während des Befüllens des Schachts mit dem sortierten Stückgut erfolgen, derart, dass eine Fallhöhe des in den Behälter bzw. den Schacht gefüllten Stückguts im Wesentlichen konstant gehalten wird. Da insbesondere das möglichst beschädigungsfreie Verladen des Stückguts etwa im Logistikbereich erstrebenswert ist, kann die Fallhöhe auf ein praktikables Minimum reduziert werden.

Es kann insbesondere hinreichend sein, dass das Absenken des Schachts im Fall b. mit einer konstanten Geschwindigkeit erfolgt, während die aus dem Stand der Technik bekannten Verfahren und Vorrichtungen stets die Absenkgeschwindigkeit des Schachtes an eine aktuell erfolgende Beladung des Schachts anpassen, da, wie oben ausgeführt, bei den aus dem Stand der Technik bekannten Verfahren und Vorrichtungen die Beladung des Schachts bzw. des Gewichts über mehrere Stunden oder gar Tage verteilt zeitlich stark inhomogen erfolgt. Erfindungsgemäß ist insbesondere nicht zwingend eine Bestimmung der dem Schacht tatsächlich zugeführten Stückgutmenge, insbesondere dessen Volumen, oder eine Bestimmung des tatsächlichen Füllvolumens des Schachtes erforderlich. Da das Volumen der Zwischenspeicher bekannt ist und das Abführen des sortierten Stückguts auf den Abzugsförderer in einem kompakten und kontinuierlichen Strom erfolgen kann, ist gemäß dem erfindungsgemäßen Verfahren der dem Schacht zugeführte Stückgutvolumenstrom zumindest in einer ersten Näherung sehr gut vorhersehbar, sodass der Schacht mit einer vorgegebenen und festen Geschwindigkeit in den zu beladenen Behälter abgesenkt werden kann.

Es ist denkbar, dass die Absenkgeschwindigkeit bzw. die Schwenkgeschwindigkeit abhängig von einem Sortierkriterium des entleerten Zwischenspeichers bestimmt wird. So kann beispielsweise für sperriges Stückgut, welches beim Befüllen des Schachts vermeintlich leichter verkantet, eine höhere Absenkgeschwindigkeit und damit ein höheres in dem Schacht zu befüllendes Volumen bzw. eine höhere Fallhöhe durch eine höhere Absenkgeschwindigkeit des Schachts in den Behälter bereitgestellt sein.

Das Sortieren von unsortiertem Stückgut in die Mehrzahl Zwischenspeicher kann das kontinuierliche oder periodische Bestimmen eines Füllstands mindestens eines der Zwischenspeicher aufweisen. Dazu kann Sensorik vorgesehen sein, wie mindestens eine Lichtschranke, mindestens eine Kamera, oder es kann auch eine steuerungstechnische Umsetzung vorgesehen sein, mittels Zählen der Stückgüter und/oder Bestimmung deren Volumen.

Dabei kann vorgesehen sein, dass mit dem Erreichen eines Zielfüllstands des sortierten Stückguts in dem mindestens einen Zwischenspeicher das Abführen des sortierten Stückguts eingeleitet wird. Der Zielfüllstand des sortierten Stückguts in dem mindestens einen Zwischenspeichers kann ein Befüllungsvolumen des betreffenden Zwischenspeichers bestimmen, welches einem ganzzahligen Bruchteil des Volumens des zu befüllenden Behälters, etwa einem Rollenbehälter oder einen Rollenkäfig, entspricht. Beispielsweise können mehrere der Zwischenspeicher oder auch sämtliche der Zwischenspeicher dasselbe Volumen aufweisen. Beispielsweise kann das Volumen des Zwischenspeichers der Hälfte des Volumens des Behälters entsprechen. So werden für die Befüllung des Behälters zwei Zwischenspeicher sequenziell auf den Abzugsförderer der Förderstrecke abgeführt. Dies kann vorzugsweise derart erfolgen, dass ein im Wesentlichen kontinuierlicher Stückgutstrom auf der Förderstrecke ausgebildet wird, wodurch eine entsprechend kontinuierliche Befüllung des höhenverstellbaren Schachts bzw. des geneigten Behälters erreicht wird.

Das Entleeren kann das Öffnen einer verschließbaren Öffnung an einer Unterseite des Schachts aufweisen, wobei der Schacht während des Öffnens der verschließbaren Öffnung aus der unteren Position in Richtung einer oberen Position angehoben wird. Das Anheben kann in einer kontinuierlichen Bewegung des Schachts erfolgen. Auch das Öffnen der verschließbaren Öffnung kann in einer kontinuierlichen Bewegung eines Verschließelements, beispielsweise einer Klappe, etwa einer zweigeteilten Klappe, erfolgen. Es kann auch vorgesehen sein, dass bei dem Öffnen der verschließbaren Öffnung das Schließelement in einer teilgeöffneten Position gehalten wird, während der Schacht weiter angehoben wird, um ein gleichmäßiges Herausströmen des Stückguts aus dem Schacht in den Behälter zu erreichen. Dabei kann weiterhin vorgesehen sein, dass erst während einer zweiten Hälfte des Entleerungsvorgangs des Stückguts aus dem Schacht in den Behälter das Verschließelement und damit der Öffnungsquerschnitt des Schachtes vollständig geöffnet wird.

Gemäß einem anderen Aspekt wird eine Vorrichtung zur Durchführung des Verfahrens für die Beladung eines Behälters mit sortiertem Stückgut nach einem der Ansprüche 1 bis 6 beschrieben. Die Vorrichtung weist eine Sortierschleife auf, mit einer Mehrzahl Zwischenspeichern für sortiertes Stückgut. Der Sorter bzw. die Sortierschleife können als ein Cross-Belt-Sorter ausgebildet sein. Die Zwischenspeicher weisen an ihrer Unterseite jeweils eine verschließbare Öffnung auf, beispielsweise eine Klappe und/oder eine Falltür, die dazu eingerichtet ist, in den Zwischenspeichern vorgehaltenes, sortiertes Stückgut schwerkraftgetrieben auf einen Abzugsförderer einer Förderstrecke zwischen den Zwischenspeichern und einer Befüllstation für Behälter abzuführen, wobei das Füllvolumen des Behälters einem Vielfachen und vorzugsweise dem Doppelten des Füllvolumens eines der Zwischenspeicher entspricht. Die Befüllstation kann einen höhenverstellbaren Schacht aufweisen, der zwischen einer oberen Position und einer unteren Position verstellbar ist. Der Schacht kann an seiner Unterseite eine verschließbare Öffnung aufweisen, die dazu eingerichtet ist, von dem Abzugsförderer dem Schacht zugeführtes Stückgut in einen Behälter zu entleeren, wenn der Schacht in einen Behälter eingetaucht ist.

Alternativ zu dem höhenverstellbaren Schacht kann die Befüllstation eine Schwenkeinrichtung für einen Behälter aufweisen, die dazu eingerichtet ist, schrittweise oder kontinuierlich den zu befüllenden Behälter abhängig von einer tatsächlichen oder erwarteten Füllhöhe des Stückguts in dem Behälter aus einer zur Vertikalen geneigten Position in eine aufrechte Position zu schwenken.

Weiterhin alternativ kann die Befüllstation eine Stückgutsammelstelle aufweisen, der der kompakte Stückgutstrom von einem Zuführförderer der Förderstrecke zugeführt ist und von welcher die Stückgüter des Stückgutstroms von einem Roboter in den Behälter dosiert sind. Der Roboter kann ein Knickarmroboter sein, der an seinem Endeffektor einen Greifer, beispielsweise einen Sauggreifer, und eine Bilderkennungseinrichtung aufweist. Dies ermöglicht es dem Roboter, die willkürlich orientiert auf der Stückgutsammelstelle angestauten Einzelstückgüter, die eine beliebige Ausrichtung im Raum und zueinander aufweisen können, individuell zu greifen und beispielsweise zur Erzielung einer hohen Packungsdichte in dem Behälter abzulegen. Die Stückgutsammelstelle kann eine Stückgutrutsche aufweisen oder sein, entlang welcher die der Stückgutsammelstelle über die Förderstrecke zugeführten Stückgüter schwerkraftgetrieben entlang einer schiefen Ebene hinuntertransportiert werden, bis sie an einem Anschlag der Stückgutsammelstelle oder an einem anderen Stückgut zur Anlage kommen.

Der Schacht kann im Fall b. mit einer Absenkgeschwindigkeit von der oberen Position in die untere Position oder im Fall a. der Behälter mit einer Winkelgeschwindigkeit aus der geneigten Position in die aufrechte Position bewegt sein, die von einem erwarteten Zuführstrom eines Stückguts abhängt. Die Absenkgeschwindigkeit, mit der der Schacht von der oberen Position in die untere Position bewegt ist, kann gemäß v ≤ Q/A bestimmt sein, wobei v die Absenkgeschwindigkeit des Schachts, Q der Zuführstrom des Stückguts und A die Grundfläche des Schachts ist. Wenn das Stückgut als kompakter Bulk-Strom auf den Abzugsförderer aufgebracht wird, insbesondere als ein solcher aus dem Zwischenspeicher auf den Abzugsförderer entleert wird, kann der Zuführstrom des Stückguts als konstant angenommen werden und demgemäß die Absenkgeschwindigkeit eine konstante Geschwindigkeit sein.

Die Zwischenspeicher können als eine Speicherrutsche ausgebildet sein, die an ihrer Unterseite die verschließbare Öffnung aufweist. Die Öffnung kann ein einstellbares Schließorgan, beispielsweise eine Klappe mit einstellbarem Klappenwinkel, aufweisen, sodass die Öffnung einen einstellbaren Öffnungsquerschnitt aufweist. Vorzugsweise weist die Speicherrutsche ein Speicherlabyrinth auf, um die kinetische Energie der auf der Speicherrutsche schwerkraftgetriebenen hinuntergleitenden Stückgüter zu verringern.

Die Zwischenspeicher können in Transportrichtung des Abzugsförderers hintereinander angeordnet sein. Die verschließbaren Öffnungen mindestens zweier der Zwischenspeicher können derart angesteuert sein, dass sie sich zeitversetzt öffnen, so dass vorzugsweise ein kontinuierlicher Zuführstrom des Stückguts auf den Abzugsförderer abgeführt und besonders bevorzugt eine Durchmischung des Stückguts aus unterschiedlichen Zwischenspeichern vermieden ist. Eine Lichtschranke kann einen Erfassungsbereich oberhalb des Abzugsförderers aufweisen, um festzustellen, dass keine Stückgüter darauf angeordnet sind.

Der Schacht kann für das Entleeren des Stückguts in den Behälter dazu eingerichtet sein, in der untersten Position die weitere verschließbare Öffnung des Schachts kontinuierlich oder schrittweise zu öffnen und sich zeitgleich oder danach aus der unteren Position in Richtung der oberen Position zu bewegen.

Der Schacht kann an mindestens drei von vier Vertikalseiten von vertikalen Seitenwänden verschlossen sein. Vorzugsweise kann eine der drei vertikalen Seitenwände an ihrem oberen Ende eine Einfüllöffnung für Stückgut aufweisen. Vorzugsweise ist eine der vier Vertikalseiten offen, beispielsweise ohne eine vertikale Seitenwand ausgebildet.

Alternativ kann der Schacht ein Rahmengestell aus Horizontal- und Vertikalstreben sein, vorzugsweise daraus bestehen, wobei mindestens eine und vorzugsweise sämtliche vertikalen Seiten des Rahmengestells offen sind.

An einem unteren Ende mindestens einer von zwei gegenüberliegend angeordneter vertikaler Seitenwände der drei vertikalen Seitenwände kann eine über einen Stellantrieb angetriebene Klappe für das Öffnen und Schließen der weiteren verschließbaren Öffnung angeordnet sein. Der Stellantrieb kann dazu eingerichtet sein, die Öffnung, etwa eine Klappe, zwischen einer offenen Position und einer Schließposition zu bewegen, wobei vorzugsweise der Stellantrieb weiterhin dazu eingerichtet ist, die Klappe auf mindestens eine Zwischenposition zwischen der Schließposition und der Offenposition festzulegen.

Die Förderstrecke kann in Transportrichtung nachfolgend zu dem Abzugsförderer einen relativ zu dem Abzugsförderer tiefer angeordneten Zuführförderer aufweisen, über den das sortierte Stückgut der Befüllstation zugeführt ist. Der Zuführförderer kann an einem Absatz zwischen dem Abzugsförderer und dem Zuführförderer eine Verjüngung der Breite der Förderstrecke mit einer Anlaufschräge aufweisen, sodass von dem Abzugsförderer über den Absatz auf den Zuführförderer fallendes Stückgut entlang der Anlaufschräge geführt ist. Damit kann eine Kompaktierung des Stückgutstroms erreicht werden, indem der Stückgutstrom an der Anlaufschräge nach Art eines Pflugs aufgetürmt wird.

Die Zwischenspeicher am Sorter bzw. an der Sortierschleife können als geschlossene Rutschen parallel zum Verlauf des Sorters bzw. der Sortierschleife ausgebildet sein. Das Abführen des sortierten Stückguts aus den Zwischenspeichern kann mit Hilfe von Sortierrutschen erfolgen, die gegen die Sorter-Laufrichtung geneigt sind. So wird die Ausschleusenergie durch Abbremsen des Stückguts abgebaut.

Im Fall a. kann die Schwenkeinrichtung eine Aufstandsfläche für den Behälter sowie eine sich senkrecht dazu erstreckende Begrenzungswand, etwa eine Rückwand aufweisen, an der der Behälter anliegt und/oder abgestützt ist, wenn der Behälter von der Schwenkeinrichtung in der zur Vertikalen verschwenkten Position positioniert ist. Eine Schwenkachse der Schwenkeinrichtung, um welche die Aufstandsfläche mit der mindestens einen Begrenzungswand verschwenkt wird, kann sich parallel zu der betreffenden Begrenzungswand erstrecken, an welcher der Behälter anliegt und/oder abgestützt ist. Die Begrenzungswand kann von mindestens einem und vorzugsweise einem Paar gegenläufig verschwenkbarer Türflügel gebildet sein, sodass die Begrenzungswand durch Verschwenken des mindestens einen Türflügels entfernt werden kann, um das Zuführen und Entfernen eines zu befüllenden Behälters zu ermöglichen.

Der Behälter kann beispielsweise ein Rollenbehälter sein und unmittelbar auf die Aufstandsfläche gerollt werden, wenn sich die Aufstandsfläche parallel zu und aufliegend auf einer Oberfläche, beispielsweise einem Fußboden, befindet. Beispielhafte Behälter können sein:
- Rollbehälter mit 3-seitiger Rückwand;
- Rollbehälter mit 4-seitiger Rückwand komplett geschlossen;
- Gitterboxen;
- Briefrollbehälterwagen;
- Europaletten mit Kunststoff- oder Kartonagenaufsatz;
- Einwegpaletten mit Kunststoff- oder Kartonagenaufsatz.

Weitere Einzelheiten der Erfindung werden anhand der nachstehenden Figuren erläutert. Dabei zeigt:
- Figur 1: in schematischer Darstellung eine beispielhafte Ausführungsform einer erfindungsgemäßen Vorrichtung;
- Figur 2: eine weitere schematische Darstellung einer erfindungsgemäßen Vorrichtung;
- Figur 3: einen Vertikalquerschnitt eines Zwischenspeichers parallel zur Transportrichtung der Förderstrecke;
- Figur 4: einen Vertikalquerschnitt des Zwischenspeichers nach Figur 3 senkrecht zur Transportrichtung der Förderstrecke;
- Figur 5: in perspektivischer Darstellung eine beispielhafte Ausführungsform einer Förderstrecke;
- Figur 6: in perspektivischer Darstellung eine beispielhafte Ausführungsform einer Befüllstation;
- Figur 7: in schematischer Darstellung die Schrittabfolge eines beispielhaften Verfahrens für das Beladen eines Behälters nach den erfindungsgemäßen Prinzipien;
- Figur 8: eine weitere Ausführungsform einer erfindungsgemäßen Befüllstation;
- Figur 9: die Ausführungsform gemäß Figur 8 mit geöffneter Begrenzungswand;
- Figur 10: die Ausführungsform gemäß den Figuren 8 und 9 mit einem darin in zur Vertikalen geneigter Position aufgenommenen Behälter;
- Figur 11: die Ausführungsform gemäß den Figuren 8 bis 10 mit einem darin in aufrechter Position aufgenommenem Behälter; und
- Figur 12: noch eine weitere Ausführungsform einer erfindungsgemäßen Befüllstation.

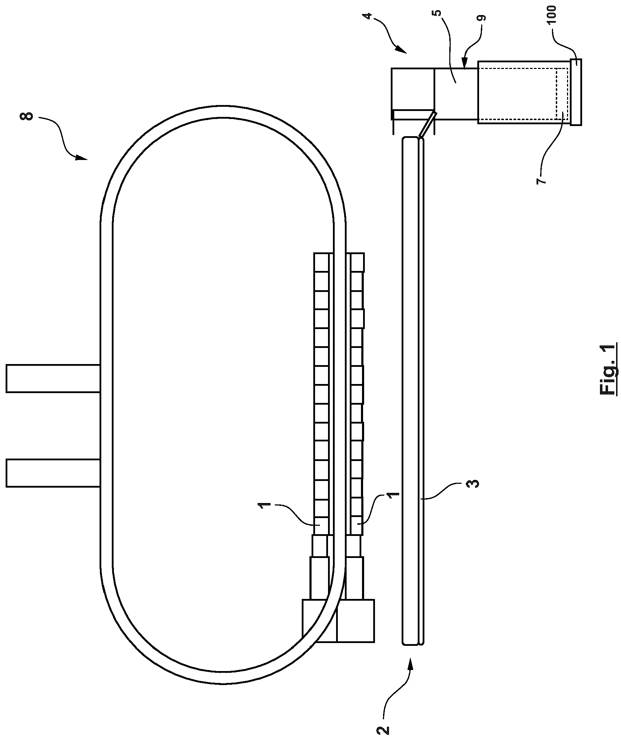

Figur 1 veranschaulicht eine beispielhafte Ausführungsform einer erfindungsgemäßen Vorrichtung für das Beladen eines Behälters 100 mit sortiertem Stückgut 200. Die Vorrichtung weist eine Sortierschleife 8 auf, die beispielsweise einen Bandförderer in umlaufender Konfiguration aufweist. Vorzugsweise wird ein Cross-Belt-Sorter verwendet, wobei auch beliebige andere Ausführungsformen aus dem Stand der Technik bekannter Sorter, die für den Transport und die Sortierung von Stückgut geeignet sind, angewendet werden können.

Nachdem die Artikel über eine semi-automatische Einschleuseinheit auf den Cross-Belt des Sorters platziert wurden, werden sie entlang des Sorterverlaufs transportiert. In der Logistikanwendung kann eine Erkennung eines Barcodes vorgesehen sein, wobei mit einem 5-Seiten Lesesystem eine Volumenmessung erfolgt. Im Anschluss kann eine Zielanfrage der Sortersteuerung über eine Datenschnittstelle durchgeführt werden. Das Ziel wird an die Sortersteuerung zurückgemeldet und das Stückgut 200, etwa eine Sendung eines Zwischenspeichers 1 zugewiesen. Wenn eine Sendung dem vorgegebene Zwischenspeicher 1 erreicht hat, wird ein Ausschleusvorgang aktiviert, wozu sich der Cross-Belt dreht und die Sendung ausgeschleust wird. Sollte der Zwischenspeicher 1 nicht verfügbar sein, kann der Artikel auf dem Sorter zirkulieren bis der Zwischenspeicher 1 wieder verfügbar ist oder eine weiterer zulässiger Zwischenspeicher 1 für die Sendung erreicht ist.

Mit Hilfe der Sortierschleife 8 werden die auf der Sortierschleife 8 transportierten Stückgüter 200 selektiv ihren zugewiesenen Zieladressen entsprechenden Zwischenspeichern 1 zugeordnet, insbesondere in diesen abgelegt oder abgeworfen. So können beispielsweise die Stückgüter 200, nachdem sie den Sortierförderer 8 verlassen haben, über ein Kipp-Förderelement in entsprechende Zwischenspeicher 1 sortiert werden. Eine derartige Vorrichtung ist beispielsweise in der EP 0 960 838 B1 beschrieben. Alternativ kann zwischen einem Cross-Belt-Sorter und den Zwischenspeichern 1 eine Rutsche angeordnet sein, auf welche der Cross-Belt-Sorter die Stückgüter befördert und entlang welcher die Stückgüter in ihren zugewiesenen Zwischenspeicher 1 rutschen.

Die Zwischenspeicher 1 können als Speicherrutschen mit einem Speicherlabyrinth 18 ausgebildet sein, welches die beim Hineinfallen des Stückguts 200 in den Zwischenspeicher 1 von dem Stückgut 200 aufgenommene kinetische Energie zumindest teilweise abbaut, sodass ein schonender Einfüllvorgang des Stückguts in den Zwischenspeicher 1 einerseits und andererseits das Abführen des sortierten Stückguts 200 aus den Zwischenspeichern 1 auf die Förderstrecke 2 ebenso schonend erfolgt.

In dem Zwischenspeicher 1 kann eine Sensorik (eine Lichtschranke, eine Kamera, oder dergleichen) angeordnet sein, die ein Signal ausgibt, wenn der Zwischenspeicher 1 voll ist. Wenn die Volumina der Stückgüter auf dem Sorter bekannt sind, kann abgeschätzt werden, wann der Zwischenspeicher 1 voll ist, sodass eine tatsächliche Messung eines Befüllungszustands oder zumindest die Erfassung eines vollständig gefüllten Zustands ("voll") entbehrlich sein kann.

Das aus den Volumina der in den Zwischenspeicher 1 sortierten Stückgüter abgeschätzte Füllvolumen des Zwischenspeicher 1 kann insofern unpräzise sein, als dass die Stückgüter aufgrund ihrer Geometrie eine kaum vorhersagbare Packungsdichte beim Befüllen in den Zwischenspeicher 1 in dem Zwischenspeicher 1 einnehmen. Zur Begrenzung dieser Ungenauigkeit kann ein Algorithmus vorgesehen sein, der aus einer Anzahl und den Volumina von Stückgütern, die in einen sensorisch abgetasteten Zwischenspeicher 1 gefüllt wurden und zu einer vollständigen Befüllung des Zwischenspeicher 1 geführt haben, Erfahrungswissen generiert werden, welches als ein Trainingsdatensatz für das Training einer künstlichen Intelligenz verwendet wird, welche anhand der Anzahl und den Volumina von Stückgütern, welche dem Zwischenspeicher 1 zugeführt werden, mit höherer statistischer Wahrscheinlichkeit korrekt auf eine vollständige Befüllung des Zwischenspeichers 1 rückschließen kann.

So kann etwa vorgesehen sein, dass im Falle einer abgeschätzten 95-prozentigen Befüllung des Zwischenspeicher 1 aus einer Mehrzahl weiterer Stückgüter, die noch auf dem Sorter liegen und bestimmungsgemäß dem Zwischenspeicher 1 zugeführt werden sollen, dasjenige Stückgut dem Zwischenspeicher 1 noch zugeführt werden, welches unter Berücksichtigung seines Volumens nicht zu einer Überfüllung des Zwischenspeicher 1 über 100 % hinaus führen würde. Beispielsweise würde bei zwei Stückgütern auf dem Sorter, von denen eines 3 % des Füllvolumens des Zwischenspeicher 1 einnimmt und das andere 10 % des Füllvolumens des Zwischenspeicher 1 einnimmt, das Stückgut mit dem 3-prozentigen Füllvolumen dem Zwischenspeicher 1 zugeführt werden, während das andere Stückgut mit dem 10-prozentigen Füllvolumen auf dem Sorter verbleibt.

Die Zwischenspeicher 1 können jeweils einen Füllstandssensor aufweisen. Der Füllstandssensor kann beispielsweise eine Lichtschranke sein oder eine solche aufweisen. Die Lichtschranke kann beispielsweise an einem oberen Einfüllende des Zwischenspeichers 1 angeordnet sein, sodass bei dauerhafter Unterbrechung der Lichtschranke durch ein das reflektierte Signal unterbrechendes Stückgut ein definierter Füllstand des Zwischenspeichers erreicht ist, beispielsweise eine Voll-Meldung ausgegeben werden kann. Das Volumen des Zwischenspeichers 1 kann einem ganzzahligen Bruchteil des Volumens des Schachts 5 entsprechen.

So kann beispielsweise vorgesehen sein, dass das Volumen des Schachts gerade dem doppelten Volumen einer der beiden Zwischenspeicher 1 entspricht, wenn die beiden Zwischenspeicher dasselbe Volumen aufweisen. Beim Umfüllen des Stückguts aus den Zwischenspeichern 1 in den Schacht kann daher vorgesehen sein, dass das Volumen in den jeweiligen Zwischenspeichern 1 sequenziell auf den Abführförderer 3 der Förderstrecke 2 überführt wird. Für das Abführen kann an einer Unterseite des Zwischenspeichers 1 je Zwischenspeicher 1 eine verschließbare Öffnung 6, etwa eine Klappe und/oder eine Falltür ausgebildet sein. Die Öffnung 6 kann beispielsweise über eine Klappe, vorzugsweise über eine zweigeteilte Klappe, verschließbar sein. Die Klappe kann in verschiedenen Stellpositionen, d.h. in verschiedenen teilgeöffneten Positionen arretierbar sein, sodass der aus dem Zwischenspeicher 1 auf den Abzugsförderer 3 abströmende Stückgutvolumenstrom einstellbar ist.

Durch das sequenzielle Abführen des Stückguts 200 aus mehreren Zwischenspeichern 1 auf den Abzugsförderer 3 kann erreicht werden, dass ein kontinuierlicher und zeitlich konstanter Stückgutvolumenstrom auf dem Abzugsförderer 3 abgelegt und dementsprechend von der Förderstrecke 2 dem Schacht 5 zugeführt wird. Dies wiederum ermöglicht es, dass für eine gleichmäßige Befüllung des Schachts bei möglichst niedriger Fallhöhe des Stückguts in den Schacht 5 bereits eine kontinuierliche Absenkung des Schachts 5 in den Behälter 100 mit einer konstanten Absenkgeschwindigkeit hinreichend ist, um eine schonende Verladung des Stückguts bereitzustellen. Gegenüber den aus dem Stand der Technik bekannten Vorrichtungen zum Beladen von Behältern ist es insbesondere nicht erforderlich, die Stückzahl und/oder das Volumen des von der Förderstrecke 2 in den Schacht 5 beförderten Stückguts zu bestimmen, um davon abhängig kontinuierlich eine jeweils erforderliche Absenkgeschwindigkeit zu bestimmen und nachzuregeln. Die kompakte Beladung der Förderstrecke 2 ermöglicht einerseits konstante Zuführgeschwindigkeiten der Förderstrecke 2 und andererseits konstante Absenkgeschwindigkeiten des Schachts 5 in den Behälter 100, indem dieser mit einem kontinuierlichen und im Wesentlichen konstanten Volumenstrom beschickt wird.

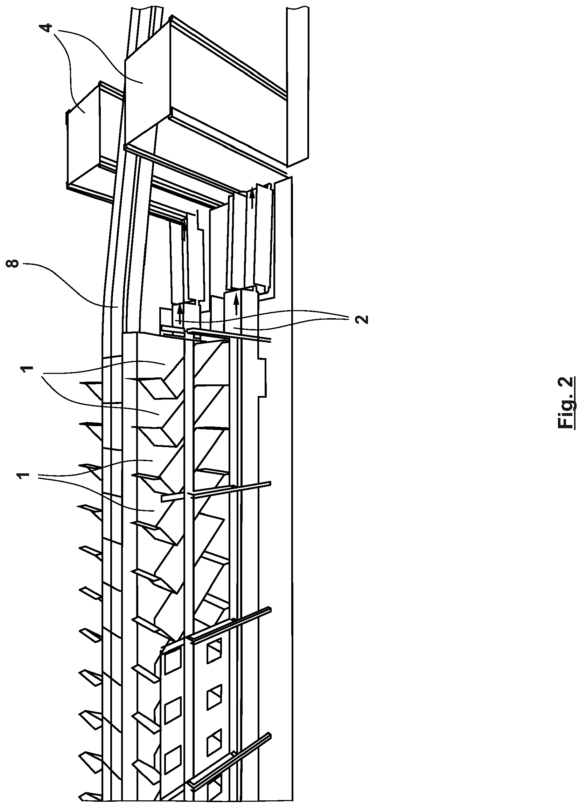

Die Figur 2 veranschaulicht die erfindungsgemäßen Vorteile gegenüber den aus dem Stand der Technik bekannten Vorrichtungen. Insbesondere ermöglicht es die Erfindung, dass eine Vielzahl von Zwischenspeichern 1, die von einer Sortierstrecke 8, beispielsweise von einem Cross-Belt-Sorter, bedient werden, über eine gemeinsame Förderstrecke 2 mit einer einzigen Befüllstation 4 verbunden werden können, sodass die Befüllstation 4 eine im Vergleich zu den aus dem Stand der Technik bekannten Vorrichtungen deutlich höhere Auslastung aufweist.

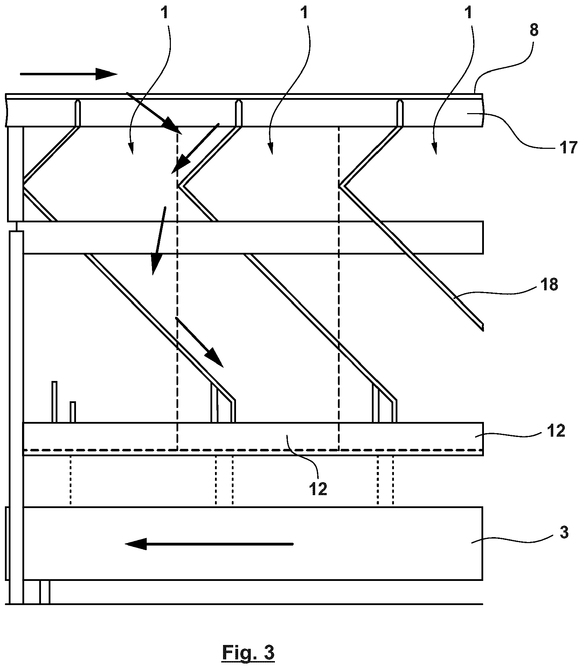

Figur 3 veranschaulicht in Querschnittsdarstellung eine beispielhafte Ausführungsform einer Kammerendstelle 1. Insbesondere sind hier mehrere Zwischenspeicher 1 über ein Speicherlabyrinth 18 voneinander abgetrennt. Die Volumina der Zwischenspeicher 1 können identisch sein und beispielsweise einem ganzzahligen Bruchteil des Volumens eines zu befüllenden Schachts einer Befüllstation (nicht dargestellt) entsprechen. Über eine Sortierstrecke 8, beispielsweise einen Cross-Belt-Sorter und eine Rutsche oder ein Kipp-Förderelement 17 können Stückgüter von dem Sorter 8 entsprechend einem Auswahlkriterium zugeordnet werden. Die erfindungsgemäße Vorrichtung kann insbesondere im Logistikbereich Anwendung finden, sodass den verschiedenen Zwischenspeichern beispielsweise unterschiedliche Zieladressen, Packmaße oder Packgewichte zugewiesen sein können. Beispielsweise kann vorgesehen sein, dass zwei Zwischenspeicher dieselbe zugewiesene Zieladresse der darin abgelegten Sendungen aufweisen, während als sich unterscheidendes Sortierkriterium zwischen den beiden Zwischenspeichern 1 ein Maximalgewicht der betreffenden Sendung ist. So kann beispielsweise bei dem Befüllen des Schachts vorgesehen sein, dass bei dem sequenziellen Abführen des Stückguts aus beiden Zwischenspeichern zunächst die schwereren Sendungen auf der Förderstrecke 2, insbesondere auf dem Abzugsförderer 3 abgelegt werden und daran anschließend erst die leichteren Stückgüter mit derselben Zieladresse auf den Abzugsförderer 3 aufgelegt werden. Folglich werden der Schacht und damit der Behälter zunächst mit den schwereren Stückgütern befüllt, sodass die leichteren Stückgüter obenauf liegen, wodurch eine Schonung der in dem Behälter gestapelten Stückgüter erreicht wird.

An der Unterseite der Zwischenspeicher 1 ist jeweils eine Klappe 12 angeordnet, die beispielsweise als zweiteilige Klappe ausgebildet sein kann und verschiedene Stellpositionen zwischen einer Schließstellung und einer Offenstellung aufweist, um ein kontinuierliches Herausströmen der Stückgüter auf den Abzugsförderer 3 und damit einen kontinuierlichen Zuführstrom auf den Abzugsförderer 3 auszubilden.

Die Zwischenspeicher 1 können als geschlossene Rutschen parallel zum Sorterverlauf ausgebildet sein. Mit diesem Rutschenkonzept können mehrere Befüllungsstationen auf dem vorgegebenen Hallengrundriss integriert werden. Die Ausschleusung kann auf Rutschen erfolgen, die gegen die Sorterlaufrichtung geneigt sind. So wird die Ausschleusenergie durch Abbremsen der Sendungen abgebaut. Anschließend rutschen die Sendungen auf Rutschenebenen, die in Sorterlaufrichtung geneigt sind. Der Zwischenspeicher 1 ist unten mit einer zweiteiligen Klappe geschlossen. Die halbseitigen Klappen öffnen elektromotorisch parallel zum Sorterverlauf.

Die Rutschenführung innerhalb eines Zwischenspeichers 1 ermöglicht eine produktschonende Zwischenpufferung. Die zweiteilige Klappe wird auf Anforderung langsam geöffnet. Die gesammelten Sendungen gleiten als 3D-Bulk auf einen unterhalb parallel zum Sorter angeordneten Abzugsförderer 3, etwa einen Gurtförderer. Je zwei Zwischenspeicher 1 sammeln die Sendungen für einen Rollbehälter. Je ein Zwischenspeicher sammelt die Sendungen für einen Briefbehälterwagen. Das Füllvolumen des Rollenbehälters kann jedoch auch in mehr oder weniger Zwischenspeicher aufgeteilt sein. Beispielsweise kann der Zwischenspeicher dasselbe Volumen wie der Behälter aufweisen. Ebenso kann der Behälter mindestens das dreifache des Volumens eines der Zwischenspeicher aufweisen. Diesbezüglich ist das erfindungsgemäße Konzept nicht eingeschränkt.

Für die Befüllungsüberwachung und die Füllstandsmessung der Zwischenspeicher 1 kann Sensorik vorgesehen sein. So kann etwa eine Überwachungs-Lichtschranke am Sorterrutschenblech gemeinsam für mehrere Zwischenspeicher 1 vorgesehen sein. Eine Voll-Melde-Lichtschranke kann je Zwischenspeicher 1 vorgesehen sein. Weiterhin kann eine Überwachung der Klappenstellung über die Endlagen des Antriebsmotors der Klappen vorgesehen sein.

Für die Befüllung eines Rollbehälters sind vorzugsweise zwei Zwischenspeicher 1 vorgesehen. Dadurch können die Endstellen kompakter aufgebaut werden und der Staudruck innerhalb einer Endstelle 1 ist reduziert. Durch mindestens zwei physische Endstellen für ein logisches Ziel werden Rezirkulationen auf dem Sorter verringert.

Für die Befüllung eines Briefbehälterwagens ist ein Zwischenspeicher 1 vorgesehen. Da der Zwischenspeicher 1 für einen Briefbehälterwagen nur etwa zu einem Drittel befüllt werden muss, ist der Staudruck in der Endstelle niedrig.

Der Zwischenspeicher 1 weitet sich nach unten konisch auf, um jegliches Verklemmen von Sendungen zu verhindern.

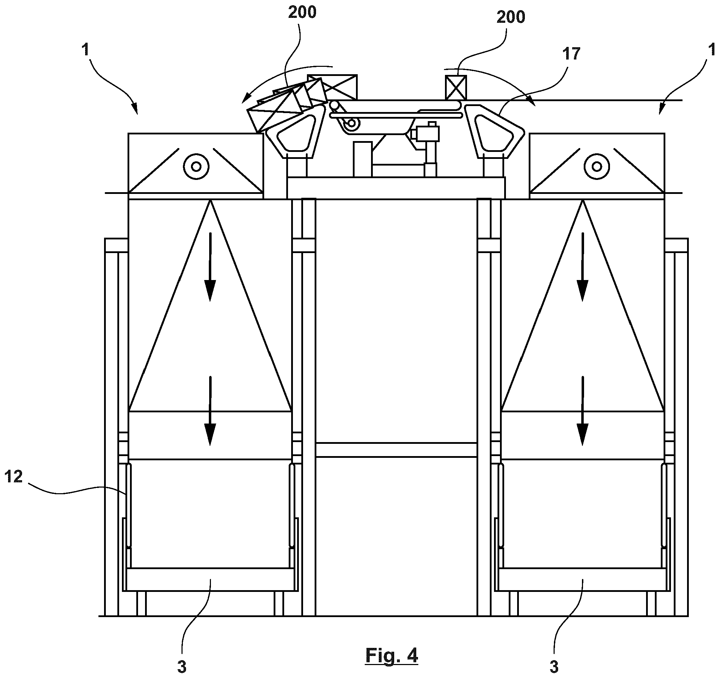

Die Figur 4 veranschaulicht insbesondere noch einmal die Vorrichtung aus einem Sorter 8 als zentrales Transportelement, der beispielsweise Bestandteil einer Sortierschleife sein kann. Parallel zur Transportrichtung (senkrecht zur Zeichnungsebene) sind Kipp-Förderelemente 17 angeordnet. Anstelle der Kipp-Förderelemente können auch starre Rutschen vorgesehen sein, insbesondere dann, wenn der Sorter 8 beispielsweise als ein Cross-Belt-Sorter ausgebildet ist, welcher unmittelbar im Stande ist, senkrecht zu seiner Vorschubbewegung die Stückgüter 200 mit dem Cross-Belt auf die Rutschen abzulegen.

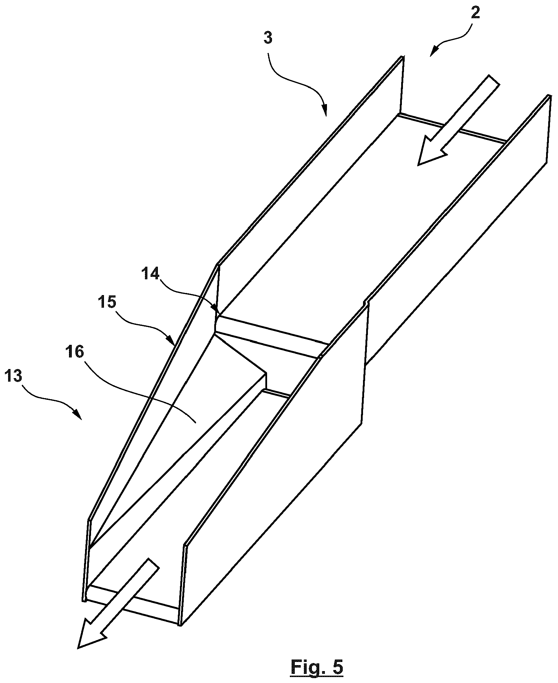

Die Figur 5 veranschaulicht eine beispielhafte Ausführungsform einer Förderstrecke 2, die in ihrer Transportrichtung (s. Pfeilrichtung) nachfolgend zu dem Abzugsförderer 3 einen relativ zu dem Abzugsförderer 3 tiefer angeordneten Zuführförderer 13 aufweist, über den das sortierte Stückgut der Befüllstation 4 zugeführt wird. Der Zuführförderer 13 weist an seinem Absatz 14 zwischen dem Abzugsförderer 3 und dem Zuführförderer 13 eine Verjüngung 15 der Breite der Förderstrecke 2 mit einer Anlaufschräge 16 auf, sodass von dem Abzugsförderer 3 über den Absatz 14 auf den Zuführförderer 13 fallendes Stückgut entlang der Anlaufschräge 16 geführt wird. Durch die Verjüngung der Förderstrecke 2 im Bereich des Zuführförderers 13 unter Verwendung der Anlaufschräge 16 wird nach dem Prinzip eines Pflugs ein Auftürmen und damit eine Kompaktierung des Stückgutstroms erreicht, sodass der Stückgutstrom zuverlässig dem Schacht zugeführt werden kann. Die Vorschubgeschwindigkeit des Abzugsförderers 3 kann 0,6 m/s sein, während die Vorschubgeschwindigkeit des Zuführförderers 13 1,2 m/s sein kann.

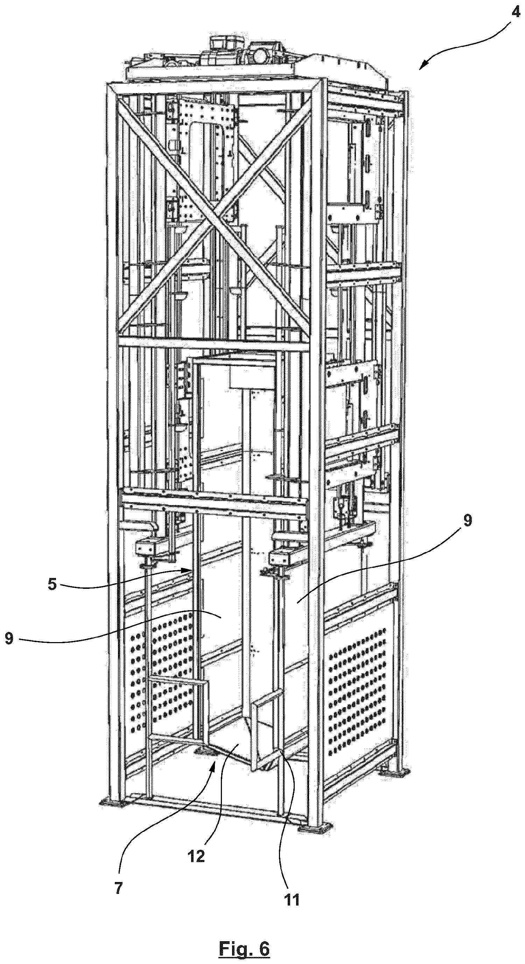

Die Figur 6 beschreibt eine beispielhafte Ausführungsform einer Befüllstation 4. Diese weist im Wesentlichen ein aus Profilen gebildetes Rahmengestell auf, welches im Kopfbereich analog zu einem Personenaufzug Antriebsmittel aufweist, mit welchen ein Schacht 5 in Vertikalrichtung verlagert werden kann. Der Schacht 5 wiederum weist an drei vertikalen Außenseiten jeweils ein Wandelement auf sowie eine über die gesamte vertikale Höhe offene Seite. An einer Unterseite weist der Schacht 5 eine verschließbare Öffnung 7 auf, die über eine Klappe, hier eine zweigeteilte Klappe 12 geöffnet und wieder verschlossen werden kann. Die beiden Teilklappen des Klappenelements 12 sind über einen Stellantrieb 11 in nahezu jeder beliebigen Stellposition zwischen einer vollständig geöffneten und einer vollständig geschlossenen Position arretierbar, sodass der Öffnungsquerschnitt der Öffnung 7 insoweit einstellbar ist, als dass ein schonendes und kontinuierliches Herausströmen des Stückguts aus dem Schacht in einen Behälter (nicht dargestellt) erzielt werden kann.

Die Befüllstation ist dazu konzipiert, die Fallhöhe des Stückguts zu reduzieren, um Beschädigungen möglichst zu verhindern. Zudem können durch die funktionale Trennung der Behälterbefüllung von den Zwischenspeichern diese kompakter gebaut werden, da die Befüllungsfunktion für eine Endstellenbank aus mehreren Zwischenspeichern zentralisiert werden kann.

Die Grundidee ist dabei ein absenkbarer Schacht, der synchron zum Bulkstrom der Stückgüter auf der Förderstrecke in einen bereitgestellten Behälter abgesenkt wird. Der Schacht 5 ist dreiseitig geschlossen. Die offene vierte Seite wird oberhalb des Behälters durch eine feste Seitenwand geschlossen. Innerhalb des Behälters bleibt die vierte Seite offen. In einer unteren Position, die das Öffnen der Klappen ermöglicht und die Fallhöhe minimiert, wird der Schacht 5 unten langsam geöffnet. Der Schacht wird soweit angehoben, dass die Klappen 12 geschlossen werden können, ohne den ggf. nachlaufenden Bulk-Strom von Stückgütern zu unterbrechen.

Zur Befüllung von Briefbehälterwagen kann eine Befüllstation zum Einsatz kommen, bei der z.B. an einem Schweißgestell aus Hohlprofilen mit einem aufgesetzten Rahmen, an dessen oberen Ende je zwei Trommeln mit je einem Drehantrieb sowie mit einem Gurt angebracht sind. Jeder Gurt kann durch die Antriebe ab- und aufgewickelt werden. Je nach Drehrichtung der Antriebe können somit die Gurte verlängert, also nach unten abgesenkt, verkürzt, also nach oben aufgewickelt oder, wenn zwei Antriebe in die gleiche Richtung drehen, umgewälzt werden. Die Gurte haben an je einer Stelle eine Öffnung, die dazu genutzt wird, die Sendungen an den Briefbehälterwagen zu übergeben.

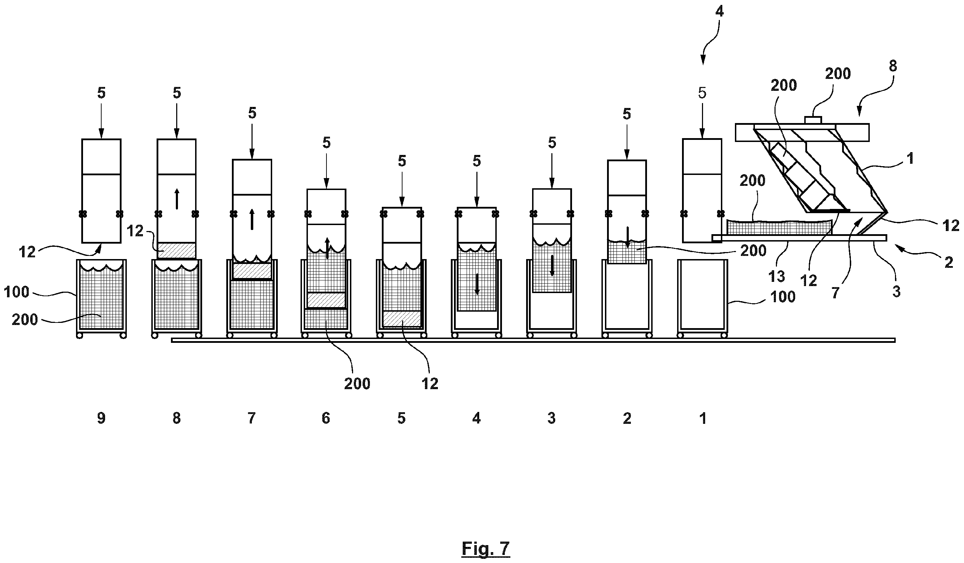

Der Beladevorgang eines Behälters 100 ist in Figur 7 in neun Teilschritten veranschaulicht. Eine Sortierschleife 8, die beispielsweise in Form eines Cross-Belt-Sorters ausgebildet ist, sortiert Stückgut 200 in Zwischenspeicher 1. Die Zwischenspeicher 1 weisen einen Füllstandssensor auf, beispielsweise einen Lichtschrankensensor. Nachdem mindestens einer der Zwischenspeicher 1 eine vorgesehene Befüllung erreicht hat, beispielsweise eine maximale Füllhöhe, kann eine verschließbare Öffnung 7 am unteren Ende des betreffenden Zwischenspeichers 1 durch das Betätigen einer Klappe 12 geöffnet werden. Aufgrund der bekannten Füllhöhe des Stückguts 200 in dem Zwischenspeicher 1 kann mit dem Öffnen der Klappe 12 in definierter Weise ein kontinuierlicher Volumenstrom 200 mit einem bestimmten Gesamtvolumen auf dem Förderelement 2, insbesondere auf dem Abzugsförderer 3 des Förderelements 2 abgelegt werden. Für die Erzielung des kontinuierlichen Volumenstroms kann die Klappe schrittweise oder kontinuierlich geöffnet werden, sodass ein kontinuierlicher Stückgutvolumenstrom aus dem Zwischenspeicher auf den Abzugsförderer 3 strömt.

Der Abzugsförderer transportiert das auf ihm abgelegte Stückgut 200 zu einem Zuführförderer 13, mit dem das Stückgut 200 in Form des kontinuierlichen Volumenstroms 200 in einen Schacht 5 einer Befüllstation 4 gefüllt wird. Die Befüllung erfolgt derart, dass die Fallhöhe des Stückguts 200 in den Schacht 5 minimal gehalten wird. Dies ist in den Schritten 2 bis 4 veranschaulicht. Demgemäß wird der Schacht 5 bei dem Befüllen des Schachts 5 mit dem Stückgut 200 kontinuierlich, d.h. mit einer vorgegebenen Absenkgeschwindigkeit in den Behälter 100 abgesenkt. Aufgrund des kontinuierlichen Volumenstroms, welcher dem Schacht 5 zugeführt wird, ist es nicht erforderlich, eine tatsächliche Befüllung des Schachts 5 mit Stückgut zu bestimmen, um davon abhängig eine geeignete Absenkung des Schachts 5 in den Behälter zu ermitteln.

Es kann vielmehr mit vorgegebenen festen Werten für die Absenkgeschwindigkeit gearbeitet und trotzdem ein schonendes Befüllen des Schachts 5 mit Stückgut 200 erreicht werden.

Nachdem in dem Schritt 4 der Schacht 5 eine maximale Eintauchtiefe in den Behälter 100 erreicht hat, kann in dem Schritt 5 die Klappe 12, welche die Öffnung 7 verschließt, geöffnet werden. Wie in der Zusammenschau der Figuren 4 und 5 zu erkennen ist, ist die maximale Eintauchtiefe des Schachts 5 in den Behälter 100 derart bestimmt, dass ein Öffnen der Klappe 12 durch Herausbewegen der Klappe 12 aus dem lichten Öffnungsmaß der Öffnung 7 nach unten, d.h. in Richtung des Bodens des Behälters 100 noch möglich ist. Wenn das Öffnen der Klappe 12 nicht abrupt, sondern in einer langsamen und kontinuierlichen Bewegung erfolgt, ist trotz der verbleibenden Fallhöhe zwischen dem Boden des Schachts 5 und dem Boden des Behälters 100 immer noch ein schonender Umfüllvorgang zwischen dem Schacht 5 und dem Behälter 100 gegeben. In den Schritten 6 bis 8 ist dann veranschaulicht, dass nach dem Öffnen der Klappe 12 der Schacht 5 kontinuierlich mit einer konstanten Geschwindigkeit aus dem Behälter 100 herausgehoben werden kann, wobei das Stückgut 200 aus Schacht 5 in den Behälter 100 umgefüllt wird.

Nachdem in dem Schritt 8 der Schacht 5 zumindest insoweit aus dem Behälter 100 herausgehoben worden ist, dass sämtliches vormals in dem Schacht 5 vorgehaltenes Stückgut 200 in den Behälter 100 umgefüllt wurde, kann in dem Schritt 9 die Klappe 12 wieder in ihre Schließposition überführt werden, wodurch der Schacht 5 zugleich bereits wieder in seine Ausgangsposition gemäß dem Schritt 1 gebracht und damit für die Neubefüllung mit Stückgut bereit ist. Nach dem Austauschen des gefüllten Behälters 100 durch einen leeren Behälter 1 kann der Befüllvorgang erneut begingen. Der Behälter 100 ist vorliegend als Rollbehälter ausgebildet.

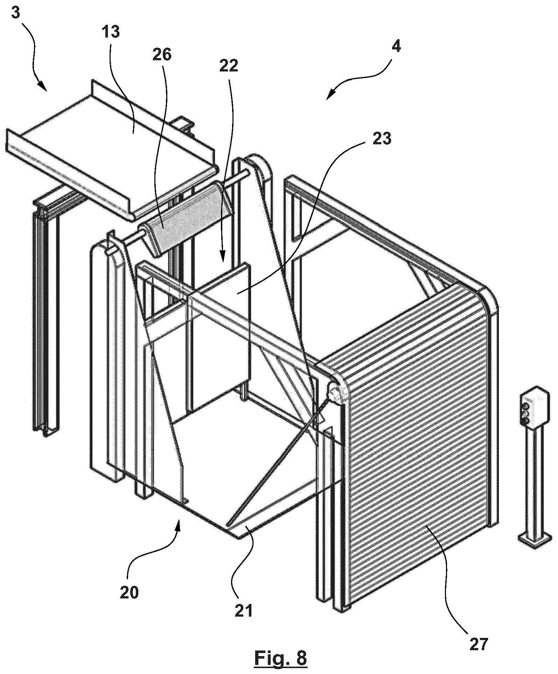

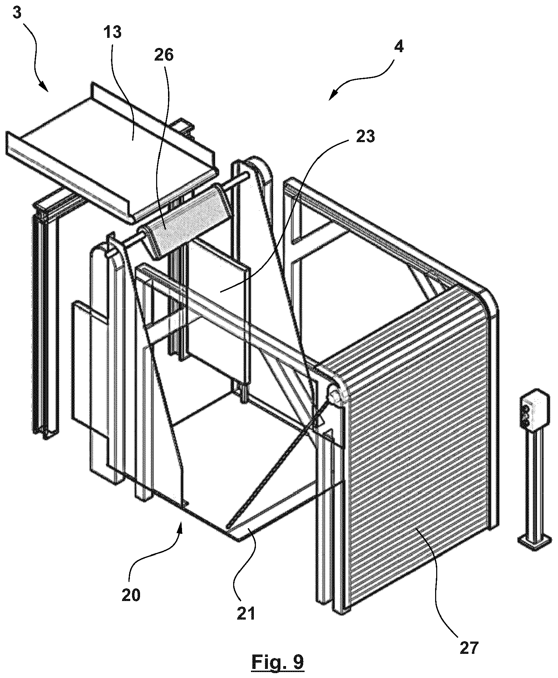

Die Figuren 8-11 zeigen eine weitere Ausführungsform einer erfindungsgemäßen Befüllstation Die Befüllstation 4 weist ein Rahmengestell mit einer darin aufgenommenen Schwenkeinrichtung 20 auf. Die Schwenkeinrichtung 20 weist eine Aufstandsfläche 21 mit sich dazu senkrecht erstreckenden Seitenwänden auf. Rückwärtig, d. h. der Förderstrecke 2 und insbesondere dem Zuführförderer 13 der Förderstrecke 2 zugewandt, weist die Schwenkeinrichtung 20 ein Paar gegenläufig verschwenkbarer Türflügel 23 auf, um den rückwärtigen Teil der Schwenkeinrichtung 20 bedarfsweise freizugeben, mithin zu öffnen, um das Einsetzen und das Entnehmen eines Behälters 100 zu ermöglichen.

Eine Sicherheitsrollade kann über die Schwenkeinrichtung 20 geschoben und anschließend ein Behälter 100 hineingeschoben werden. Dabei sichert die Rollade den Bediener davor, dass ihm nichts auf den Kopf fällt. Wenn der Behäter 100 in der Station 4 steht, wird die Sicherheitsrollade geschlossen. Nach dem Befüllen fährt die Rollade wieder über den Bereich um den Entnehmer zu schützen. Dann können die Türflügel 23 geöffnet und der Behälter 100 aus der Station 4 gezogen werden.

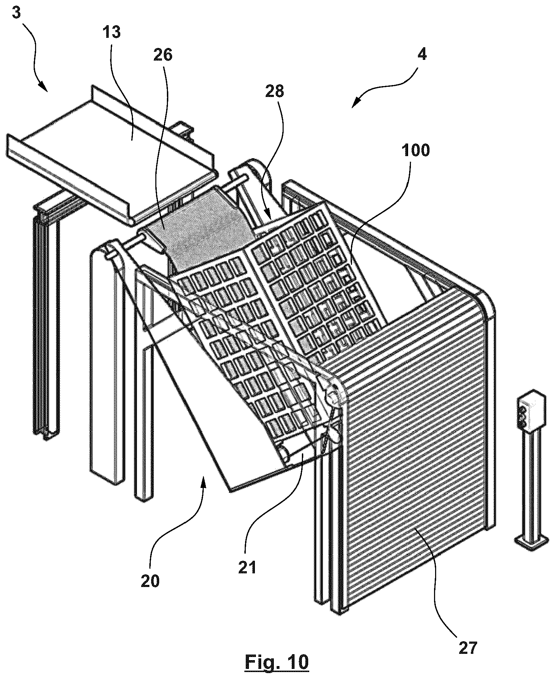

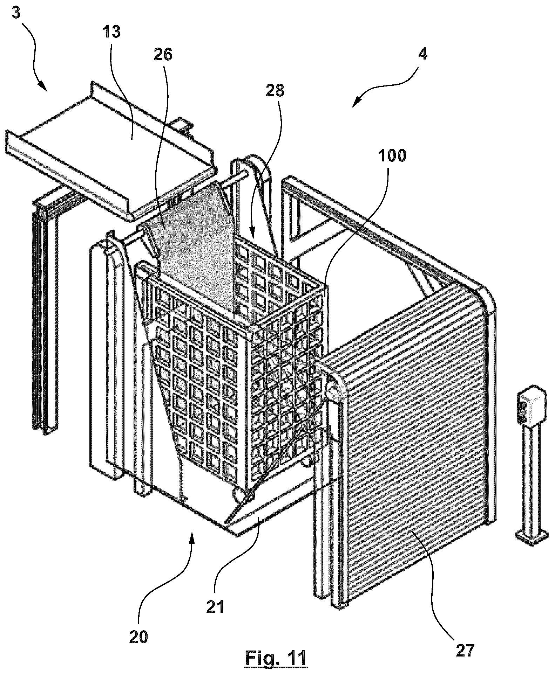

Nachdem also ein (leerer) Behälter 100, beispielsweise ein Rollbehälter, auf die Aufstandsfläche 21 der Schwenkeinrichtung 20 gerollt worden ist, kann die Schwenkeinrichtung 20 mit dem darauf abgestellten Behälter 100 in die in Figur 10 gezeigte zur vertikalen geneigte Position verschwenkt werden. In dieser verschwenkten Position ist der vertikale Abstand zwischen einer oberen Einfüllöffnung des Behälters 101 und dem Boden des Behälters 100 gegenüber seiner aufrechten Ausrichtung (vergleiche Figur 11) vermindert, sodass die Fallhöhe des von dem Zuführförderer 13 der Förderstrecke 2 in die Öffnung des Behälters 100 dosierten Stückguts verringert ist.

Wenn der Behälter 100 mit der Schwenkeinrichtung 20 aus der in Figur 11 gezeigten, aufrechten Position in die in Figur 10 gezeigte, zur vertikalen verschwenkte Position geschwenkt wird, kommt der Behälter 100 an den Türflügeln 23 zur Anlage, sodass die Beabstandung des Behälters 100 in Bezug auf den Zuführförderer 13 ein vorgegebenes Maß einnimmt und ein prozesssicheres Abwerfen von Stückgütern in den Behälter 100 gewährleistet ist. Für eine Führung der von dem Zuführförderer 13 abgeworfenen Stückgüter zur Öffnung des Behälters 100 kann ein flexibles und/oder verstellbares Führungselemente 26, beispielsweise eine Kufe und/oder eine textile Materialbahn, vorgesehen sein, welches den Übergangsbereich zwischen dem dem Behälter 100 zugewandten Ende des Zuführförderers 13 und der Öffnung des Behälters 100 überbrückt. Je nach Beschaffenheit der Behälters 100 kann dieses erforderlich sein, wenn die Behälterrückwand zum Beispiel grobmaschig ist. So sind etwa Behälter 100 bekannt, deren Rückwand aus einem Lochblech besteht. Die Löcher sind dabei so klein, dass das Stückgut gut über die Rückwand in den Behälter gleiten bzw. rutschen kann.

Es gibt aber auch Behälter, die einer Gitterbox ähneln. Das heißt die Behälter haben eine Rückwand, die sehr grobmaschig ist und große Löcher haben. Hier würden Produkte nicht über die Rückwand rutschen. Daher kann es erforderlich sein, dass ein flexibles Führungselement Nr.26 vor der Sortierung in den Behälter gelassen wird.

Während der Stückgutstrom von dem Zuführförderer 13 über die Öffnung des Behälters 100 in den Behälter 100 dosiert wird, kann der Behälter 100 von der Schwenkeinrichtung 20 kontinuierlich oder schrittweise aus der in Figur 10 gezeigten zur vertikalen angeschrägten Position in Richtung der in Figur 11 gezeigten aufrechten Position verschwenkt werden. Der Behälter kann jedoch auch während des gesamten Einfüllvorgangs in der angeschrägten Position gehalten werden. Durch die Schrägstellung wird einerseits die bereits beschriebene Minimierung der Fallhöhe der Stückgüter und andererseits ein gleichmäßiges Befüllen des Behälters 100 gewährleistet. Dabei kann gleichzeitig ein Rückwandschutz impulsartig aus dem Behälter herausgezogen werden.

Da der Stückgutstrom der Befüllstation 4 in einem kompakten Volumenstrom von der Förderstrecke 2 zugeführt wird, kann der gesamte Befüllvorgang des Behälters 100 und damit der Verschwenkvorgang zwischen den in den Figuren 10 und 11 gezeigten Positionen wenige Sekunden andauern und beispielsweise bereits in weniger als 30 Sekunden vollständig abgeschlossen sein.

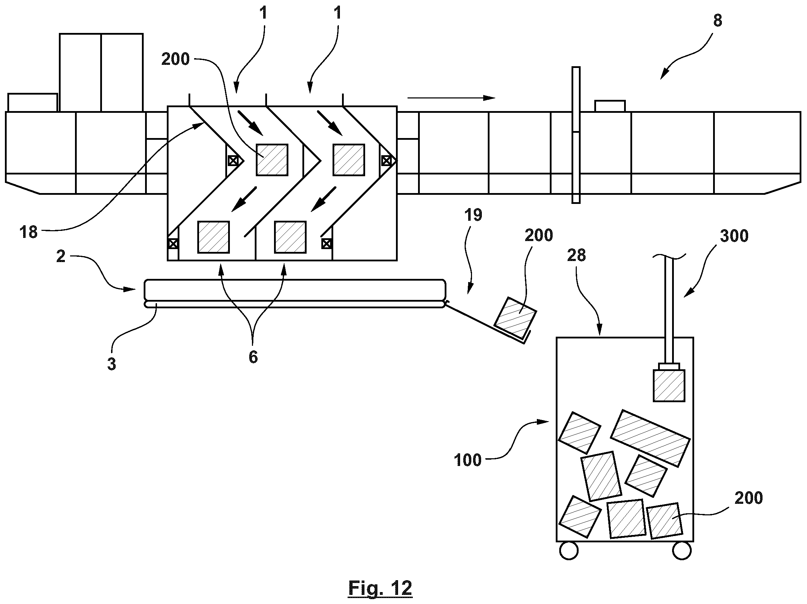

Die Figur 12 zeigt eine Befüllstation, die eine Stückgutsammelstelle 19 aufweist, der der kompakte Stückgutstrom (nicht dargestellt) von einem Zuführförderer 13 der Förderstrecke 2 zugeführt ist und von welcher die Stückgüter 200 des Stückgutstroms von einem Roboter 300 in den Behälter 100 dosiert sind.

Nachdem der Behälter 100 die Figur 11 gezeigte aufrechte Position erreicht hat, kann der Behälter entweder über das frontseitige Rolltor 27 oder über die rückwärtigen Türflügel 23 entnommen werden.

Der Roboter 100 kann ein beliebiger Roboter sein, beispielsweise ein Knickarmroboter. Der Roboter 100 kann an seinem Endeffektor einen Greifer, etwa einen Sauggreifer, und eine Bilderkennungseinrichtung aufweisen. Dies ermöglicht es dem Roboter 100, die willkürlich orientiert auf der Stückgutsammelstelle 19 angestauten Einzelstückgüter, die eine beliebige Ausrichtung im Raum und zueinander aufweisen können, individuell zu greifen und beispielsweise zur Erzielung einer hohen Packungsdichte in dem Behälter abzulegen bzw. dort hinein fallenzulassen.

Die Stückgutsammelstelle 19 kann als eine sich aufweitende Rutsche ausgebildet sein, die an ihrem unteren Ende einen Anschlag aufweist, beispielsweise in Form einer Blechumkantung. Die der Stückgutsammelstelle über die Förderstrecke zugeführten Stückgüter können über die Rutsche schwerkraftgetrieben entlang einer schiefen Ebene hinuntertransportiert werden, bis sie an dem Anschlag der Stückgutsammelstelle oder an einem anderen Stückgut zur Anlage kommen.

### Bezugszeichenliste:

- 1: Zwischenspeicher
- 2: Förderstrecke
- 3: Abzugsförderer
- 4: Befüllstation
- 5: Schacht
- 6: verschließbare Öffnung
- 7: weitere verschließbare Öffnung
- 8: Sortierschleife
- 9: Seitenwand
- 10: Einfüllöffnung
- 11: Stellantrieb
- 12: Klappe
- 13: Zuführförderer
- 14: Absatz
- 15: Verjüngung
- 16: Anlaufschräge
- 17: Kipp-Förderelement/Rutsche
- 18: Speicherlabyrinth
- 19: Stückgutsammelstelle
- 20: Schwenkeinrichtung
- 21: Auftstandsfläche
- 22: Begrenzungswand
- 23: Türflügel
- 25: Boden
- 26: Führungselement
- 27: Tor
- 100: Behälter
- 200: Stückgut
- 300: Roboter

## Patentansprüche

1. Verfahren für das Beladen eines Behälters (100) mit sortiertem Stückgut (200), wobei das Verfahren die Schritte aufweist:
- Sortieren von unsortiertem Stückgut (200) in eine Mehrzahl Zwischenspeicher (1), wobei in jedem Zwischenspeicher (1) sortiertes Stückgut (200) erhalten wird;
- Abführen des sortierten Stückguts (200) von mindestens einem der Zwischenspeicher (1) auf einen Abzugsförderer (3) einer Förderstrecke (2), mit der das sortierte Stückgut (200) einer Befüllstation (4) zugeführt wird, wobei das sortierte Stückgut (200) als ein kompakter Stückgutstrom über eine bodenseitige Öffnung des Zwischenspeichers (1) auf den Abzugsförderer (3) fällt, wobei das Abführen des sortierten Stückguts (200) das sequenzielle Abführen eines ersten sortierten Stückguts (200) aus einem ersten Zwischenspeicher (1) und das Abführen eines zweiten sortierten Stückguts (200) aus einem zweiten Zwischenspeicher (1) aufweist, wobei das erste und das zweite sortierte Stückgut (200) aufeinanderfolgend auf dem Abzugsförderer (3) aufgelegt werden; und
- Beladen eines zu beladenen Behälters (100) in der Befüllstation (4) mit dem ersten und dem zweiten sortierten Stückgut (200).

2. Verfahren nach Anspruch 1, bei dem entweder
a. der zu beladene Behälter (100) in einer zur Vertikalen geneigten Position gehalten oder aus dieser Position in eine aufrechte Position geschwenkt wird, wobei der vertikale Abstand zwischen einer Einfüllöffnung (10) des Behälters (100) und einem Boden (25) des Behälters (100) kontinuierlich oder schrittweise vergrößert wird, oder
b. ein höhenverstellbarer Schacht (5) der Befüllstation (4) mit dem sortierten Stückgut (200) befüllt und in dem zu beladenen Behälter (100) abgesenkt wird, und wobei das sortierte Stückgut (200) aus dem Schacht (5) in den Behälter (100) entleert wird, wenn der Schacht (5) infolge des Absenkens eine untere Position erreicht hat, oder
c. der kompakte Stückgutstrom von einem Zuführförderer (13) der Förderstrecke (2) einer Stückgutsammelstelle (19) zugeführt wird, von welcher die Stückgüter (200) des Stückgutstroms von einem Roboter (300) in den Behälter (100) dosiert werden.

3. Verfahren nach Anspruch 2, bei dem in dem Fall a. der Behälter (100) abhängig von einem tatsächlichen oder erwarteten Füllstand des Stückguts (200) in dem Behälter (100) aus der zur Vertikalen geneigten Position in die aufrechte Position geschwenkt wird.

4. Verfahren nach Anspruch 2 oder 3, bei dem im dem Fall a. das Schwenken des Behälters (100) oder in dem Fall b. das Absenken des Schachts (5) während des Befüllens des Schachts (5) mit dem sortierten Stückgut (200) erfolgt, derart, dass eine Fallhöhe des in den Behälter (100) bzw. den Schacht (5) gefüllten Stückguts (200) im Wesentlichen konstant gehalten oder minimiert wird.

5. Verfahren nach einem der vorangegangen Ansprüche, bei dem das Sortieren von unsortiertem Stückgut (200) in eine Mehrzahl Zwischenspeicher (1) das kontinuierliche oder periodische Bestimmen eines Füllstands mindestens eines der Zwischenspeicher (1) aufweist, wobei mit dem Erreichen eines Zielfüllstands des sortierten Stückguts (200) in dem mindestens einen Zwischenspeicher (1) das Abführen des sortierten Stückguts (200) eingeleitet wird.

6. Verfahren nach einem der Ansprüche 2 bis 5, bei dem das Entleeren das Öffnen einer verschließbaren Öffnung (7) an einer Unterseite des Schachts (5) aufweist, wobei vorzugsweise der Schacht (5) während des Öffnens der verschließbaren Öffnung (7) aus der unteren Position in Richtung einer oberen Position angehoben wird.

7. Vorrichtung zur Durchführung des Verfahrens für die Beladung eines Behälters (100) mit sortiertem Stückgut (200) nach einem der vorangehenden Ansprüche, wobei die Vorrichtung eine Befüllstation (4) für Behälter (100) mit zumindest einem Behälter (100) aufweist, wobei die Vorrichtung ferner eine Sortierschleife (8) mit einer Mehrzahl Zwischenspeicher (1) für sortiertes Stückgut (200) aufweist, die jeweils eine verschließbare Öffnung (6) aufweisen, die dazu eingerichtet ist, in den Zwischenspeichern (1) vorgehaltenes, sortiertes Stückgut (200) als einen kompakten Stückgutstrom schwerkraftgetrieben auf einen Abzugsförderer (3) einer Förderstrecke (2) zwischen den Zwischenspeichern (1) und der Befüllstation (4) für Behälter (100) zu entleeren, **dadurch gekennzeichnet, dass** die Öffnung (6) jeweils an der Unterseite der Zwischenspeicher angeordnet ist und das Füllvolumen des Behälters (100) einem Vielfachen und vorzugsweise dem Doppelten des Füllvolumens eines der Zwischenspeicher (1) entspricht.

8. Vorrichtung nach Anspruch 7, bei der die Befüllstation (4) entweder
a. eine Schwenkeinrichtung (20) für einen Behälter (100) aufweist, die dazu eingerichtet ist, einen zu befüllenden Behälter (100) in einer zur Vertikalen geneigten Position zu halten oder schrittweise oder kontinuierlich den Behälter (100) abhängig von einer tatsächlichen oder erwarteten Füllhöhe des Stückguts (200) in dem Behälter (100) aus der zur Vertikalen geneigten Position in eine aufrechte Position zu schwenken, oder
b. einen höhenverstellbaren Schacht (5) aufweist, der zwischen einer oberen Position und einer unteren Position verstellbar ist, und wobei der Schacht (5) an seiner Unterseite eine verschließbare Öffnung (7) aufweist, die dazu eingerichtet ist, von dem Abzugsförderer (3) dem Schacht (5) zugeführtes Stückgut (200) in einen Behälter (100) zu entleeren, wenn der Schacht (5) in einen Behälter (100) eingetaucht ist, oder
c. eine Stückgutsammelstelle (19) aufweist, der der kompakte Stückgutstrom von einem Zuführförderer (13) der Förderstrecke (2) zugeführt ist und von welcher die Stückgüter (200) des Stückgutstroms von einem Roboter (20) in den Behälter (100) dosiert sind.

9. Vorrichtung nach Anspruch 8, bei der in dem Fall b. der Schacht (5) mit einer Absenkgeschwindigkeit von der oberen Position in die untere Position oder im Fall a. der Behälter (100) mit einer Winkelgeschwindigkeit aus der geneigten Position in die aufrechte Position bewegt ist, die von einem erwarteten Zuführstrom eines Stückguts (200) abhängt, wenn der Behälter (100) nicht in der zur Vertikalen geneigten Position gehalten wird.

10. Vorrichtung nach einem der Ansprüche 7 bis 9, bei der die Zwischenspeicher (1) als eine Speicherrutsche ausgebildet sind, die an ihrer Unterseite die verschließbare Öffnung (6) aufweist, wobei die Öffnung (6) ein einstellbares Schließorgan, vorzugsweise eine Klappe mit einstellbarem Klappenwinkel, aufweist, sodass die Öffnung (6) einen einstellbaren Öffnungsquerschnitt aufweist.

11. Vorrichtung nach Anspruch 10, bei der die Speicherrutsche ein Speicherlabyrinth (18) aufweist.

12. Vorrichtung nach einem der Ansprüche 7 bis 11, bei der die Zwischenspeicher (1) in Transportrichtung des Abzugsförderers (3) hintereinander angeordnet sind, wobei die verschließbare Öffnung (6) mindestens eines, vorzugsweise mindestens zweier der Zwischenspeicher (1) derart angesteuert sind, dass sie sich zeitversetzt oder gleichzeitig öffnen, so dass vorzugsweise ein kontinuierlicher Zuführstrom des Stückguts (200) auf den Abzugsförderer (3) abgeführt ist.

13. Vorrichtung nach einem der Ansprüche 7 bis 12, bei der in dem Fall b. der Schacht (5) für das Entleeren des Stückguts (200) in den Behälter (100) dazu eingerichtet ist, in der untersten Position die verschließbare Öffnung (7) des Schachts (5) kontinuierlich oder schrittweise zu öffnen und sich zeitgleich oder danach aus der unteren Position in Richtung der oberen Position zu bewegen.

14. Vorrichtung nach einem der Ansprüche 8 bis 13, bei der in dem Fall b. der Schacht (5) an mindestens einer von vier Vertikalseiten von einer vertikalen Seitenwand (9) verschlossen ist, und wobei vorzugsweise eine der vertikalen Seitenwände (9) an ihrem oberen Ende eine Einfüllöffnung (10) für Stückgut (200) aufweist, und wobei vorzugsweise eine der vier Vertikalseiten offen ist.

15. Vorrichtung nach einem der Ansprüche 8 bis 13, bei der der Schacht (5) ein Rahmengestell aus Horizontal- und Vertikalstreben ist, wobei mindestens eine und vorzugsweise sämtliche vertikalen Seiten des Rahmengestells offen sind.

16. Vorrichtung nach einem der Ansprüche 8 bis 15, bei der an einem unteren Ende des Schachts eine angetriebene Klappe (12) für das Öffnen und Schließen der verschließbaren Öffnung (7) angeordnet ist.

17. Vorrichtung nach einem der Ansprüche 7 bis 16, bei der die Förderstrecke (2) in Transportrichtung nachfolgend zu dem Abzugsförderer (3) einen relativ zu dem Abzugsförderer (3) tiefer angeordneten Zuführförderer (13) aufweist, über den das sortierte Stückgut (200) der Befüllstation (4) zugeführt ist, wobei der Zuführförderer (13) an einem Absatz (14) zwischen dem Abzugsförderer (3) und dem Zuführförderer (13) eine Verjüngung (15) der Breite der Förderstrecke (2) mit einer Anlaufschräge (16) aufweist, so dass von dem Abzugsförderer (3) über den Absatz (14) auf den Zuführförderer (13) fallendes Stückgut (200) entlang der Anlaufschräge (16) geführt ist.

18. Vorrichtung nach einem der Ansprüche 8 bis 17, bei der in dem Fall a. die Schwenkeinrichtung (20) eine Aufstandsfläche (21) für den Behälter (100) sowie eine sich senkrecht dazu erstreckende Begrenzungswand (22) aufweist, an der der Behälter (100) anliegt, wenn der Behälter (100) von der Schwenkeinrichtung (20) in der zur Vertikalen verschwenkten Position positioniert ist.

## Claims

1. A method for loading a container (100) with sorted piece goods (200), the method comprising the steps of:
- Sorting unsorted piece goods (200) into a plurality of intermediate stores (1), wherein sorted piece goods (200) are obtained in each intermediate store (1);
- Discharging the sorted piece goods (200) from at least one of the intermediate stores (1) onto a discharge conveyor (3) of a conveying line (2), by means of which the sorted piece goods (200) are fed to a filling station (4), the sorted piece goods (200) falling as a compact piece goods stream via a bottom-side opening of the intermediate store (1) onto the discharge conveyor (3), wherein said discharging of the sorted piece goods (200) comprises sequential discharging of a first sorted piece good (200) from a first intermediate storage (1) and discharging of a second sorted piece good (200) from a second intermediate storage (1), wherein the first and the second sorted piece goods (200) are successively placed on the discharge conveyor (3); and
- Loading a container (100) to be loaded in the filling station (4) with the first and the second sorted piece goods (200).

2. The method according to claim 1, wherein either
a. the container (100) to be loaded is held in a position inclined to the vertical or is pivoted from this position to an upright position, the vertical distance between a filling opening (10) of the container (100) and a bottom (25) of the container (100) being increased continuously or stepwise, or
b. a height-adjustable chute (5) of the filling station (4) is filled with the sorted piece goods (200) and lowered into the container (100) to be loaded, and wherein the sorted piece goods (200) are emptied from the chute (5) into the container (100) when the chute (5) has reached a lower position as a result of the lowering, or
c. the compact piece goods stream is fed from a feed conveyor (13) of the conveyor line (2) to a piece goods collection point (19), from which the piece goods (200) of the piece goods stream are metered into the container (100) by a robot (300).

3. The method according to claim 2, wherein in the case a. the container (100) is pivoted from the position inclined to the vertical to the upright position depending on an actual or expected filling level of the piece goods (200) in the container (100).

4. The method according to claim 2 or 3, wherein in case a. pivoting of the container (100) or in case b. lowering of the chute (5) is performed during filling of the chute (5) with the sorted piece goods (200), such that a drop height of the piece goods (200) filled into the container (100) or the chute (5), respectively, is kept substantially constant or minimized.

5. The method according to any one of the preceding claims, wherein sorting unsorted piece goods (200) into a plurality of intermediate stores (1) comprises continuously or periodically determining a fill level of at least one of the intermediate stores (1), wherein upon reaching a target fill level of the sorted piece goods (200) in the at least one intermediate store (1), discharging of the sorted piece goods (200) is initiated.

6. The method of any one of claims 2 to 5, wherein the emptying comprises opening a closable opening (7) at a bottom side of the chute (5), wherein preferably the chute (5) is lifted from the lower position towards an upper position during the opening of the closable opening (7).

7. A device for carrying out the method for loading a container (100) with sorted piece goods (200) according to one of the preceding claims, wherein the device comprises a filling station (4) for containers (100) with at least one container (100), wherein the device further comprises a sorting loop (8) with a plurality of intermediate stores (1) for sorted piece goods (200), each of which comprises a closable opening (6), which is arranged to transfer sorted piece goods (200) stored in the intermediate stores (1) as a compact piece goods flow, driven by gravity, onto a discharge conveyor (3) of a conveyor line (2) between the intermediate stores (1) and the filling station (4), sorted piece goods (200) held in the intermediate stores (1) as a compact piece goods stream onto a discharge conveyor (3) of a conveying section (2) between the intermediate stores (1) and the filling station (4) for containers (100), **characterized in that** the opening (6) is arranged on the underside of the intermediate stores and the filling volume of the container (100) corresponds to a multiple and preferably twice the filling volume of one of the intermediate stores (1).

8. The device of claim 7, wherein the filling station (4) is either
a. a pivoting device (20) for a container (100), which is arranged to hold a container (100) to be filled in a position inclined to the vertical or to pivot the container (100) stepwise or continuously from the position inclined to the vertical to an upright position depending on an actual or expected filling level of the piece goods (200) in the container (100), or
b. has a height-adjustable chute (5) which can be adjusted between an upper position and a lower position, and wherein the chute (5) has a closable opening (7) on its underside which is set up to empty piece goods (200) fed to the chute (5) by the discharge conveyor (3) into a container (100) when the chute (5) is immerged in a container (100), or
c. a piece goods collecting station (19) to which the compact piece goods stream is fed from a feed conveyor (13) of the conveyor line (2) and from which the piece goods (200) of the piece goods stream are metered into the container (100) by a robot (20).

9. The device of claim 8, wherein in case b. the chute (5) is moved from the upper position to the lower position at a lowering speed or in case a. the container (100) is moved from the inclined position to the upright position at an angular speed that depends on an expected feed flow of a piece of material (200) when the container (100) is not maintained in the position inclined to the vertical.

10. The device according to any one of claims 7 to 9, in which the intermediate storage means (1) is designed as a storage chute which has the closable opening (6) on its underside, the opening (6) having an adjustable closing member, preferably a flap with an adjustable flap angle, so that the opening (6) has an adjustable opening cross section.

11. The device of claim 10, wherein the storage chute comprises a storage maze (18).

12. The device according to any one of claims 7 to 11, in which the intermediate stores (1) are arranged one behind the other in the transport direction of the discharge conveyor (3), the closable opening (6) of at least one, preferably at least two, of the intermediate stores (1) being controlled in such a way that they open with a time delay or simultaneously, so that preferably a continuous feed stream of the piece goods (200) is discharged onto the discharge conveyor (3).

13. The device according to any one of claims 7 to 12, wherein in the case b. the chute (5) for emptying the piece goods (200) into the container (100) is adapted to open the closable opening (7) of the chute (5) continuously or stepwise in the lowermost position and to move simultaneously or thereafter from the lower position towards the upper position.

14. The device according to any one of claims 8 to 13, wherein in the case b. the chute (5) is closed on at least one of four vertical sides by a vertical side wall (9), and wherein preferably one of the vertical side walls (9) has a filling opening (10) for piece goods (200) at its upper end, and wherein preferably one of the four vertical sides is open.

15. The device according to any one of claims 8 to 13, wherein the chute (5) is a framework of horizontal and vertical struts, at least one and preferably all vertical sides of the framework being open.

16. The device according to any one of claims 8 to 15, wherein a driven flap (12) is arranged at a lower end of the chute for opening and closing the closable opening (7).

17. The device according to one of the claims 7 to 16, in which the conveyor line (2) has, downstream in the transport direction from the discharge conveyor (3), a feed conveyor (13) which is arranged lower relative to the discharge conveyor (3) and via which the sorted piece goods (200) are fed to the filling station (4), the feed conveyor (13) having, at a step (14) between the discharge conveyor (3) and the feed conveyor (13), a tapering (15) of the width of the conveying path (2) with a run-up slope (16), so that piece goods (200) falling from the discharge conveyor (3) over the step (14) onto the feed conveyor (13) are guided along the run-up slope (16).

18. The device according to any one of claims 8 to 17, wherein in the case a. the pivoting device (20) comprises a support surface (21) for the container (100) and a boundary wall (22) extending perpendicularly thereto, against which the container (100) rests when the container (100) is positioned by the pivoting device (20) in the position pivoted to the vertical.

## Revendications

1. Procédé pour le chargement d'un récipient (100) avec des pièces triées (200), dans lequel le procédé comprend les étapes suivantes :
- triage des pièces non tirées (200) dans une pluralité de réservoirs intermédiaires (1), dans lequel les pièces triées (200) sont maintenues dans chaque réservoir intermédiaire (1) ;
- évacuation des pièces triées (200) d'au moins un des réservoirs intermédiaires (1) vers un convoyeur d'évacuation (3) d'un tronçon de convoyage (2), avec lequel les pièces triées (200) sont introduites dans une station de remplissage (4), dans lequel les pièces triées (200) tombent, sous la forme d'un flux de pièces compact, par une ouverture côté fond du réservoir intermédiaire (1), sur le convoyeur d'évacuation (3), dans lequel l'évacuation des pièces triées (200) comprend l'évacuation séquentielle de premières pièces triées (1) et l'évacuation de deuxièmes pièces triées (200) hors d'un deuxième réservoir intermédiaire (1), dans lequel les premières et deuxièmes pièces triées (200) sont posées successivement sur le convoyeur d'évacuation (3) ; et
- chargement d'un récipient (100) à charger dans la station de remplissage (4) avec les premières et les deuxièmes pièces triées (200).

2. Procédé selon la revendication 1, dans lequel soit
a. le récipient à charger (100) est maintenu dans une position inclinée par rapport à la verticale ou est pivoté de cette position vers une position verticale, dans lequel la distance verticale entre l'ouverture d'entrée (10) du récipient (100) et un fond (25) du récipient (100) augmente de manière continue ou par étapes ou
b. un compartiment réglable en hauteur (5) de la station de remplissage (4) est rempli avec les pièces triées (200) est abaissé dans le récipient à charger (100) et dans lequel les pièces triées (200) sont vidées hors du compartiment (5) dans le récipient (100), lorsque le compartiment (5) a atteint, à la suite de l'abaissement, une position inférieure ou
c. le flux de pièces compact provenant d'un convoyeur d'alimentation (13) du tronçon de convoyage (2) est introduit dans un emplacement de collecte de pièces (19) à partir duquel les pièces (200) du flux de pièces sont dosées par un robot (300) dans le récipient (100).

3. Procédé selon la revendication 2, dans lequel, dans le cas a., le récipient (100) est pivoté, en fonction d'un état de remplissage réel ou attendu des pièces (200) dans le récipient (100), de la position inclinée par rapport à la verticale vers la position verticale.

4. Procédé selon la revendication 2 ou 3, dans lequel, dans le cas a., le pivotement du récipient (100) ou, dans le cas b., l'abaissement du compartiment (5), a lieu pendant le remplissage du compartiment (5) avec les pièces triées (200), de sorte qu'une hauteur de chute des pièces (200) introduites dans le récipient (100) ou dans le compartiment (5) est maintenue globalement constante ou minimisée.

5. Procédé selon l'une des revendications précédentes, dans lequel le tri des pièces non triées (200) dans une pluralité de réservoirs intermédiaires (1) comprend la détermination en continu ou périodique d'un état de remplissage d'au moins un des réservoirs intermédiaires (1), dans lequel, lorsqu'un état de remplissage cible a été atteint par les pièces triées (200) dans l'au moins un réservoir intermédiaire (1), l'évacuation des pièces triées (200) est initiée.

6. Procédé selon l'une des revendications 2 à 5, dans lequel le vidage comprend l'ouverture d'une ouverture refermable (7) sur un côté inférieur du compartiment (5), dans lequel, de préférence, le compartiment (5) est soulevé, pendant l'ouverture de l'ouverture refermable (7), de la position inférieure en direction d'une position supérieure.

7. Dispositif pour l'exécution du procédé pour le chargement d'un récipient (100) avec des pièces triées (200) selon l'une des revendications précédentes, dans lequel le dispositif comprend une station de remplissage (4) pour des récipients (100) avec au moins un récipient (100), dans lequel le dispositif comprend en outre une boucle de tri (8) avec une pluralité de réservoirs intermédiaires (1) pour les pièces triées (200), qui comprennent chacun une ouverture refermable (6), qui est conçu pour évacuer les pièces triées (200) sous la forme d'un flux de pièces compact, sous l'effet de la gravité, vers un convoyeur d'évacuation (3) d'un tronçon de convoyage (2), entre les réservoirs intermédiaires (1) et la station de remplissage (4) pour récipients (100), **caractérisé en ce que** l'ouverture (6) est disposée respectivement sur le côté inférieur des réservoirs intermédiaires et le volume de remplissage du récipient (100) correspond à un multiple et, de préférence, au double du volume de remplissage d'un des réservoirs intermédiaires (1).

8. Dispositif selon la revendication 7 dans lequel la station de remplissage (4)
a. un dispositif de pivotement (20) pour un récipient (100), qui est conçu pour maintenir un récipient à remplir (100) dans une position inclinée par rapport à la verticale et pour pivoter par étapes ou de manière continue le récipient (100), en fonction d'une hauteur de remplissage réelle ou attendue des pièces (200) dans le récipient (100), de la position inclinée par rapport à la verticale vers une position verticale ou
b. comprend un compartiment réglable en hauteur (5) qui peut être déplacé entre une position supérieure et une position inférieure et dans lequel le compartiment (5) comprend, sur con côté inférieur, une ouverture refermable (7) qui est conçue pour vider les pièces (200) introduites par le convoyeur d'évacuation (3) dans le compartiment (5), vers un récipient (100), lorsque le compartiment (5) est plongé dans un récipient (100) ou
c. comprend un point de collecte de pièces (19) dans lequel est introduit le flux de pièces compact à l'aide d'un convoyeur d'alimentation (13) du tronçon de convoyage (2) et à partir duquel les pièces (200) du flux de pièces sont dosées par un robot (20) dans le récipient (100).

9. Dispositif selon la revendication 8, dans lequel, dans le cas b., le compartiment (5) est déplacé, avec une vitesse d'abaissement, de la position supérieure vers la position inférieure ou, dans le cas a., le récipient (100) est déplacé, avec une vitesse angulaire, de la position inclinée vers la position verticale, qui dépend d'un flux d'alimentation attendu des pièces (200), lorsque le récipient (100) n'est pas maintenu dans la position inclinée par rapport à la verticale.

10. Dispositif selon l'une des revendications 7 à 9, dans lequel les réservoirs intermédiaires (1) sont conçus sous la forme d'une goulotte de stockage qui comprend, sur son côté inférieur, l'ouverture refermable (6), dans lequel l'ouverture (6) comprend un organe de fermeture réglable, de préférence un clapet avec un angle de clapet réglable, de sorte que l'ouverture (6) présente une section transversale d'ouverture réglable.

11. Dispositif selon la revendication 10, dans lequel la goulotte de stockage comprend un labyrinthe de stockage (18).

12. Dispositif selon l'une des revendications 7 à 11, dans lequel les réservoirs intermédiaires (1) sont disposés les uns derrière les autres dans la direction de transport du convoyeur d'évacuation (3), dans lequel l'ouverture refermable (6) est contrôlée par au moins un, de préférence deux réservoirs intermédiaires (1) de sorte qu'ils s'ouvrent de manière décalée dans le temps ou simultanément, de sorte que, de préférence, un flux d'alimentation continu des pièces (200) est évacué vers le convoyeur d'évacuation (3).

13. Dispositif selon l'une des revendications 7 à 12, dans lequel, dans le cas b., le compartiment (5) pour le vidage des pièces (200) dans le récipient (100) est conçu pour ouvrir de manière continue ou par étapes, dans la position la plus basse, l'ouverture refermable (7) du compartiment (5) et se déplacer simultanément ou ensuite à partir de la position inférieure en direction de la position supérieure.

14. Dispositif selon l'une des revendications 8 à 13, dans lequel, dans le cas b., le compartiment (5) est fermé, au niveau d'au moins une parmi quatre faces verticales, par une paroi latérale verticale (9), et dans lequel, de préférence, une des parois latérales verticales (9) comprend, au niveau de son extrémité supérieure, une ouverture de remplissage (10) pour les pièces (200) et dans lequel, de préférence, une des quatre faces verticales est ouverte.

15. Dispositif selon l'une des revendications 8 à 13, dans lequel le compartiment (5) est un châssis constitué d'entretoises horizontales et verticales, dans lequel au moins une et de préférence toutes les faces verticales du châssis sont ouvertes.

16. Dispositif selon l'une des revendications 8 à 15, dans lequel, au niveau d'une extrémité inférieure du compartiment, est disposé un clapet entraîné (12) pour l'ouverture et la fermeture de l'ouverture refermable (7).

17. Dispositif selon l'une des revendications 7 à 16, dans lequel le tronçon de convoyage (2) comprend, successivement, dans la direction de transport vers le convoyeur d'évacuation (3), un convoyeur d'alimentation (13) disposé plus bas par rapport au convoyeur d'évacuation (3), par l'intermédiaire duquel les pièces triées (200) sont introduites dans la station de remplissage (4), dans lequel le convoyeur d'alimentation (13) présente, au niveau d'un épaulement (14) entre le convoyeur d'évacuation (3) et le convoyeur d'alimentation (13), un rétrécissement (15) de la largeur du tronçon de convoyage (2) avec un chanfrein d'entrée (16), de sorte que les pièces (200) tombant du convoyeur d'évacuation (3) sur le convoyeur d'alimentation (13), en passant par l'épaulement (14), sont guidées le long du chanfrein d'entrée (16).

18. Dispositif selon l'une des revendications 8 à 17, dans lequel, dans le cas a., le dispositif de pivotement (20) comprend une surface de support (21) pour le récipient (100) ainsi qu'une paroi de délimitation (22), qui s'étend perpendiculairement par rapport à celle-ci, contre laquelle s'appuie le récipient (100) lorsque le récipient (100) est positionné par le dispositif de pivotement (20) dans la position pivotée par rapport à la verticale.
